# EUROPÄISCHE PATENTSCHRIFT

(11) **EP 4 129 037 B1**
(45) Veröffentlichungstag und Bekanntmachung des Hinweises auf die Patenterteilung: **02.10.2024**
(21) Anmeldenummer: 22168284.2
(22) Anmeldetag: 14.04.2022
(51) Int. Cl.: A01B 76/00

(54) **LANDWIRTSCHAFTLICHE ARBEITSMASCHINE SOWIE BEDIENEINRICHTUNG**
AGRICULTURAL WORKING MACHINE AND CONTROL DEVICE
MACHINE DE TRAVAIL AGRICOLE, AINSI QUE DISPOSITIF DE COMMANDE

(30) Priorität: 05.08.2021 DE 102021120399
(43) Veröffentlichungstag der Anmeldung: 08.02.2023
(73) Patentinhaber: CLAAS Tractor S.A.S., 78141 Vélizy-Villacoublay Cedex (FR)
(72) Erfinder: Garcia, Remi, 92260 Fontenay-Aux-Roses (FR)
(74) Vertreter: CLAAS Gruppe

(56) Entgegenhaltungen:
- EP-A1- 3 396 478
- DE-A1- 102017 219 540
- DE-A1- 102018 123 438
- US-B2- 9 622 399

## Beschreibung

Die vorliegende Erfindung betrifft eine landwirtschaftliche Arbeitsmaschine gemäß Anspruch 1 sowie eine Bedieneinrichtung gemäß Anspruch 12.

Eine landwirtschaftliche Arbeitsmaschine ist insbesondere dazu eingerichtet, als Zugmaschine von landwirtschaftlichen Maschinen beziehungsweise Anbaugeräten zur landwirtschaftlichen Bestellung von Feldern eingesetzt zu werden. Dazu wird das Anbaugerät mit der landwirtschaftlichen Arbeitsmaschine verbunden, beispielsweise mittels einer Kupplung. Als ein übliches Anbaugerät ist beispielsweise eine Ballenpresse, ein Pflug oder eine Egge zu nennen.

Die landwirtschaftliche Arbeitsmaschine umfasst ein in Form eines Fronthubwerks ausgebildetes Hubwerk, ein in Form eines Heckhubwerks ausgebildetes Hubwerk sowie eine Bedieneinrichtung. Bei der landwirtschaftlichen Arbeitsmaschine kann es sich insbesondere um einen Traktor handeln.

Das Hubwerk, welches häufig auch als Dreipunkt-Kraftheber oder Dreipunkthydraulik bezeichnet wird, ist eine hydraulische Vorrichtung an dem Traktor, um ein Anbaugerät ankuppeln beziehungsweise anheben zu können. Die Bezeichnung "Dreipunkt" ergibt sich daraus, dass die Vorrichtung üblicherweise mittels dreier Befestigungspunkte am Traktor befestigt ist. Bei einer einfachen Ausführung des Hubwerks kann die Abwärtsbewegung desselben durch ein Eigengewicht beziehungsweise durch ein Gewicht des Anbaugeräts erfolgen. Andernfalls und üblicherweise ist das Hubwerk hydraulisch betrieben beziehungsweise betreibbar.

Landwirtschaftliche Arbeitsmaschinen der vorstehend beschriebenen Art sind zum Beispiel aus der EP3396478A bekannt. Da insbesondere moderne landwirtschaftliche Arbeitsmaschinen mit diverser Technik ausgestattet sind, kann es vorteilhaft sein, Steuerungseinrichtungen beziehungsweise Anzeigeeinrichtungen zur Steuerung beziehungsweise Überwachung der Technik in einen Arbeitsbereich des Benutzers zu integrieren. Insbesondere im Kontext der Arbeit mit Anbaugeräten ist es wichtig, dass der Benutzer der landwirtschaftlichen Arbeitsmaschine die Hubstellung des/der Hubwerke exakt ausrichten kann, damit ein Ankuppeln der Anbaugeräte fehlerfrei erfolgt, aber auch die Arbeitshöhe der Anbaugeräte exakt einstellbar ist. Die Sichtbarkeit auf die Hubwerke während eines Einstellvorgangs ist für den Benutzer, der sich zur Einstellung der Hubstellung innerhalb der Fahrzeugkabine befindet, in der Regel nur sehr eingeschränkt bzw. oftmals überhaupt nicht gegeben. Die WO 2014/165178 A1 schlägt zur Lösung dieser Problematik beispielsweise eine Bedieneinrichtung vor, die neben einem Bedienelement zur Bedienung der Hubwerke noch ein Visualisierungselement umfasst, mittels dessen eine aktuelle Hubstellung eines aktiven Hubwerks visualisierbar ist.

Zwar erleichtert ein Visualisierungselement dem Benutzer die Einstellung der Hubwerke aus der Fahrzeugkabine heraus, in dem es beispielsweise eine aktuelle Hubstellung durch ein Aktivieren einer Mehrzahl von Leuchtmitteln visualisiert, jedoch geht eine Visualisierung auch mit einigen Ungenauigkeiten einher. Es verhält sich in aller Regel so, dass die aktuelle Hubstellung und somit auch die Visualisierung der aktuellen Hubstellung des aktiven Hubwerks einer mittels des Bedienelements einstellbaren bzw. eingestellten Zielhubstellung des aktiven Hubwerks bedingt durch eine Trägheit bei der Signalübertragung leicht verzögert nachläuft. Der Benutzer bedient das Betätigungselement somit oftmals länger als nötig und stellt nicht unmittelbar die gewünschte Zielhubstellung ein, sondern muss mittels des Bedienelements nachjustieren. Dieser Vorgang ist nicht nur sehr zeitintensiv, sondern ist für den Benutzer im Hinblick auf die Bedienfreundlichkeit der Arbeitsmaschine als nicht ausreichend zufriedenstellend anzusehen.

Ausgehend von dem vorstehend genannten Stand der Technik ist es demnach die Aufgabe der vorliegenden Erfindung, eine landwirtschaftliche Arbeitsmaschine anzugeben, die eine unmittelbare und genaue Einstellung der Hubwerke ermöglicht und somit die Bedienfreundlichkeit der Arbeitsmaschine erheblich steigert.

Diese Aufgabe wird erfindungsgemäß durch die Merkmale des unabhängigen Patentanspruchs 1 gelöst, wobei vorteilhafte Weiterbildungen der erfindungsgemäßen landwirtschaftlichen Arbeitsmaschine Gegenstand der entsprechenden abhängigen Patentansprüche 2 bis 11 sind.

Demnach betrifft die vorliegende Erfindung eine landwirtschaftliche Arbeitsmaschine, insbesondere einen Traktor, die ein Fronthubwerk, ein Heckhubwerk sowie eine Bedieneinrichtung umfasst. Die Bedieneinrichtung umfasst ferner ein Bedienelement zur Bedienung beider Hubwerke, mindestens einen Auswahlschalter, mittels dessen ein Fokus des Bedienelements zwischen den Hubwerken umschaltbar ist, und mindestens ein Visualisierungselement, mittels dessen eine aktuelle Hubstellung des aktiven Hubwerks, auf dem der Fokus des Bedienelements liegt, visualisierbar ist. Die landwirtschaftliche Arbeitsmaschine ist dadurch gekennzeichnet, dass das Bedienelement eine Einrichtung aufweist, die dazu eingerichtet ist, mindestens ein für einen Benutzer der landwirtschaftlichen Arbeitsmaschine wahrnehmbares haptisches Feedback zu erzeugen.

Die einfach auch als Arbeitsmaschine bezeichnete landwirtschaftliche Arbeitsmaschine bringt viele Vorteile mit sich. Einerseits kann der Benutzer der Arbeitsmaschine selbige besonders einfach bedienen. Der Benutzer kann mittels der Bedieneinrichtung, welche das Bedienelement zur Bedienung beider Hubwerke umfasst, beide Hubwerke bedienen. Hierzu umfasst die Bedieneinrichtung einen Auswahlschalter, mittels dem der Benutzer auswählen kann, welches der Hubwerke er bedienen möchte. Mit anderen Worten kann der Benutzer den Auswahlschalter betätigen und somit auswählen, ob er das Fronthubwerk oder das Heckhubwerk bedienen möchte. Der Auswahlschalter kann beispielsweise zwei Druckknöpfe umfassen, die alternativ aktivierbar sind, wobei jeweils einer der Druckknöpfe einem der Hubwerke zugeordnet ist. Die Druckknöpfe können optische Rückmeldemittel umfassen, anhand derer dem Maschinenführer anzeigbar ist, welcher Druckknopf aktuell "aktiv" geschaltet ist und somit auf welchem der Hubwerke aktuell der Fokus liegt.

Damit der Benutzer während der Bedienung nicht durcheinanderkommt, welches der Hubwerke er gerade mittels des Auswahlschalters ausgewählt hat und somit bedient, umfasst die Bedieneinrichtung das mindestens eine Visualisierungselement. Mittels dieses Visualisierungselements ist eine aktuelle Hubstellung des aktiven Hubwerks, auf dem ein Fokus des Bedienelements liegt, visualisierbar. Das Visualisierungselement kann beispielsweise in Form einer optischen Anzeige ausgebildet sein.

Da der Benutzer somit lediglich die eine Bedieneinrichtung bedienen und im Blick halten muss, ist eine besonders einfache Bedienung bereitgestellt. Hierdurch ergibt sich andererseits zusätzlich der Vorteil, dass die Bedienung besonders fehlerarm erfolgt, da die Anforderungen an die Konzentration des Benutzers durch eine reduzierte Komplexität der Bedienung besonders geringgehalten werden können.

Die Bereitstellung einer Einrichtung im Bedienelement, die mindestens ein haptisches Feedback erzeugt, das von dem Benutzer während der Bedienung des Bedienelements wahrgenommen wird, erlaubt es darüber hinaus die eingangs beschriebene Problematik der Zeitverzögerung zwischen aktueller Hubstellung und mittels des Bedienelements eingestellter Zielhubstellung zu kompensieren und ein unnötiges Nachstellen durch den Benutzer zu vermeiden.

Mit anderen Worten, die Einrichtung kann als Verifikationseinrichtung angesehen werden, die dem Benutzer ein Feedback gibt, ob sich die eingestellte Zielhubstellung der Hubwerke bereits im gewünschten vorabfestlegbaren bzw. vorabfestgelegten und/oder speicherbaren bzw. gespeicherten Stellungsbereich befindet oder nicht. Ferner kann dem Benutzer bestätigt werden, ob etwaige mittels des Bedienelements vorgenommene Einstellungen abgeschlossen sind.

Erfindungsgemäss ist die Einrichtung als Linearresonanzaktuator ausgebildet, wobei das mindestens eine haptische Feedback mindestens eine Vibrationscharakteristik ist.

Die Bereitstellung eines Linearresonanzaktuators, der verschiedene Vibrationscharakteristiken erzeugen kann, ist besonders vorteilhaft anzusehen, da eine Vibration ein sehr deutlich wahrnehmbares haptisches Signal darstellt, das der Benutzer nahezu unmittelbar bei aber auch nach der Betätigung des Bedienelements wahrnehmen kann. Zudem lässt sich über die Parameter Intensität und Frequenz eine Vielzahl von verschiedenen Vibrationscharakteristiken generieren, mittels derer dem Benutzer eine Rückmeldung zu unterschiedlichsten Einstellvorgängen gegeben werden kann.

Der Linearresonanzaktuator ist dazu eingerichtet, eine erste Vibrationscharakteristik bei einer Annäherung einer mittels des Bedienelements einstellbaren Zielhubstellung des aktiven Hubwerks an eine vorabfestlegbare Maximalhubstellung Pᵥₘₐₓ des aktiven Hubwerks zu erzeugen, wobei die Vibration der ersten Vibrationscharakteristik durch eine zunächst kontinuierlich ansteigende und anschließend konstante Vibrationsintensität charakterisiert ist.

Ferner ist der Linearresonanzaktuator dazu eingerichtet, eine zweite Vibrationscharakteristik bei einer Annäherung einer mittels des Bedienelements einstellbaren Zielhubstellung des aktiven Hubwerks an eine vorabfestlegbare Minimalhubstellung Pᵥₘᵢₙ des aktiven Hubwerks zu erzeugen, wobei die Vibration der zweiten Vibrationscharakteristik durch eine konstante Vibrationsintensität charakterisiert ist.

Außerdem ist der Linearresonanzaktuator dazu eingerichtet, eine dritte Vibrationscharakteristik bei einer Annäherung einer mittels des Bedienelements einstellbaren Zielhubstellung des aktiven Hubwerks an eine gespeicherte Hubstellung Pₛₚ des aktiven Hubwerks zu erzeugen, wobei die Vibration der dritten Vibrationscharakteristik durch eine zunächst kontinuierlich ansteigende, dann konstante und anschließend kontinuierlich abnehmende Vibrationsintensität charakterisiert ist. Auf die Speicherung einer Hubstellung wird im weiteren Verlauf der Beschreibung noch detaillierter eingegangen.

Durch das Aufprägen von verschiedenen Vibrationscharakteristiken mittels des Linearresonanzaktuators ist es für den Benutzer möglich, bei einer Betätigung des Bedienelements zur Einstellung der Zielhubstellung unmittelbar zu erkennen, dass die Zielhubstellung sich einer spezifischen vorabfestlegbaren bzw. vorabfestgelegten und/oder speicherbaren bzw. gespeicherten Hubstellung nähert. Ferner kann der Benutzer sehr einfach feststellen, welcher dieser Hubstellungen er sich gegenwärtig mittels der Betätigung des Bedienelements nähert, so dass der Benutzer unmittelbar erkennen kann, ob die Betätigung des Bedienelements in die richtige Richtung erfolgt. Dies erlaubt ein schnelles, unkompliziertes und vor allem korrektes Einstellen der Zielhubstellung auf eine vorabfestlegbare bzw. vorabfestgelegte und/oder speicherbare bzw. gespeicherte Hubstellung.

Gemäß einer weiteren vorteilhaften Weiterbildung der Erfindung weist die erste Vibrationscharakteristik drei, vorzugsweise unmittelbar, aufeinanderfolgende Vibrationsintervalle auf, wobei in einem ersten Vibrationsintervall die Intensität der Vibration kontinuierlich und proportional von null bis zu einem ersten Intensitätswert I₁₁ steigt, wobei in einem auf das erste Vibrationsintervall folgenden zweiten Vibrationsintervall die Intensität der Vibration konstant bei einem zweiten Intensitätswert I₁₂ liegt, dessen Betrag höher ist als der des ersten Intensitätswerts I₁₁, wobei die Intensität der Vibration in einem auf das zweite Vibrationsintervall folgenden dritten Vibrationsintervall der Intensität der Vibration des zweiten Vibrationsintervalls entspricht. Eine Frequenz der Vibration ist in den drei Vibrationsintervallen identisch. Der Linearresonanzaktuator ist dazu eingerichtet, von einem Zeitpunkt t₁₁, an dem die mittels des Bedienelements einstellbare Zielhubstellung des aktiven Hubwerks einem Schwellenwert P₁₁ unterhalb der vorabfestlegbaren Maximalhubstellung Pᵥₘₐₓ des aktiven Hubwerks, insbesondere einem Schwellenwert 10% unterhalb der vorabfestlegbaren Maximalhubstellung Pᵥₘₐₓ, entspricht, bis zu einem Zeitpunkt t₁₂, an dem die mittels des Bedienelements einstellbare Zielhubstellung des aktiven Hubwerks der vorabfestlegbaren Maximalhubstellung Pᵥₘₐₓ entspricht, das erste Vibrationsintervall zu erzeugen, von dem Zeitpunkt t₁₂ bis zu einem Zeitpunkt t₁₃, an dem eine Betätigung des Bedienelements abgeschlossen ist, das zweite Vibrationsintervall zu erzeugen und von dem Zeitpunkt t₁₃ bis zu einem Zeitpunkt t₁₄, der ein gewisses Zeitintervall nach dem Zeitpunkt t₁₃ liegt, vorzugsweise mindestens 300 ms nach dem Zeitpunkt t₁₃, besonders bevorzugt genau 300 ms nach dem Zeitpunkt t₁₃, das dritte Vibrationsintervall zu erzeugen.

Gemäß einer weiteren vorteilhaften Weiterbildung der Erfindung weist die zweite Vibrationscharakteristik zwei, vorzugsweise unmittelbar, aufeinanderfolgende Vibrationsintervalle auf, wobei in einem ersten Vibrationsintervall die Intensität der Vibration konstant bei einem Intensitätswert I₂₁ liegt, der größer null ist, wobei die Intensität der Vibration in einem auf das erste Vibrationsintervall folgenden zweiten Vibrationsintervall der Intensität der Vibration des ersten Vibrationsintervalls entspricht. Eine Frequenz der Vibration ist in den beiden Vibrationsintervallen identisch. Der Linearresonanzaktuator ist dazu eingerichtet, von einem Zeitpunkt I₂₁, an dem die mittels des Bedienelements einstellbare Zielhubstellung des aktiven Hubwerks der vorabfestlegbaren Minimalhubstellung Pᵥₘᵢₙ des aktiven Hubwerks entspricht, bis zu einem Zeitpunkt t₂₂, an dem eine Betätigung des Bedienelements abgeschlossen ist, das erste Vibrationsintervall zu erzeugen und von dem Zeitpunkt t₂₂ bis zu einem Zeitpunkt t₂₃, der ein gewisses Zeitintervall nach dem Zeitpunkt t₂₂ liegt, vorzugsweise mindestens 300 ms nach dem Zeitpunkt t₂₂, besonders bevorzugt genau 300 ms nach dem Zeitpunkt t₂₂, das zweite Vibrationsintervall zu erzeugen.

Gemäß einer vorteilhaften Weiterbildung der Erfindung weist die dritte Vibrationscharakteristik fünf, vorzugsweise unmittelbar, aufeinanderfolgende Vibrationsintervalle auf, wobei in einem ersten Vibrationsintervall die Intensität der Vibration kontinuierlich und proportional von null bis zu einem ersten Intensitätswert I₃₁ steigt, wobei in einem auf das erste Vibrationsintervall folgenden zweiten Vibrationsintervall die Intensität der Vibration konstant bei einem zweiten Intensitätswert I₃₂ liegt, dessen Betrag größer ist als der des ersten Intensitätswerts I₃₁, wobei die Intensität der Vibration in einem auf das zweite Vibrationsintervall folgenden dritten Vibrationsintervall der Intensität der Vibration des zweiten Vibrationsintervalls entspricht, wobei in einem auf das dritte Vibrationsintervall folgenden vierten Vibrationsintervall die Intensität der Vibration kontinuierlich und proportional von dem ersten Intensitätswert I₃₁ auf einen dritten Intensitätswert I₃₃ sinkt, dessen Betrag geringer ist als der des ersten Intensitätswerts I₃₁, wobei in einem auf das vierte Intensitätsintervall folgenden fünften Vibrationsintervall die Intensität der Vibration kontinuierlich und proportional von dem dritten Intensitätswert I₃₃ auf null sinkt. Eine Frequenz der Vibration ist in den fünf Vibrationsintervallen identisch. Der Linearresonanzaktuator ist dazu eingerichtet, von einem Zeitpunkt t₃₁, an dem die mittels des Bedienelements einstellbare Zielhubstellung des aktiven Hubwerks einem ersten Schwellenwert P₃₁ unterhalb oder oberhalb der gespeicherten Hubstellung Pₛₚ des aktiven Hubwerks, insbesondere einem Schwellenwert P₃₁ 10% unterhalb oder oberhalb der gespeicherten Hubstellung Pₛₚ, entspricht, bis zu einem Zeitpunkt t₃₂, an dem die mittels des Bedienelements einstellbare Zielhubstellung des aktiven Hubwerks einem zweiten Schwellenwert P₃₂ unterhalb oder oberhalb der gespeicherten Hubstellung Pₛₚ, insbesondere einem zweiten Schwellenwert P₃₂ 2% unterhalb oder oberhalb der gespeicherten Hubstellung Pₛₚ, entspricht, das erste Vibrationsintervall zu erzeugen, von dem Zeitpunkt t₃₂ bis zu dem Zeitpunkt t₃₃, an dem die mittels des Bedienelements einstellbare Zielhubstellung des aktiven Hubwerks der gespeicherten Hubstellung Pₛₚ entspricht, das zweite Vibrationsintervall zu erzeugen, von dem Zeitpunkt t₃₃ bis zu einem Zeitpunkt t₃₄, an dem die mittels des Bedienelements einstellbare Zielhubstellung des aktiven Hubwerks einem dritten Schwellenwert P₃₃ oberhalb oder unterhalb der gespeicherten Hubstellung Pₛₚ, insbesondere einem dritten Schwellenwert P₃₃ 2% oberhalb oder unterhalb der gespeicherten Hubstellung Pₛₚ, entspricht, das dritte Vibrationsintervall zu erzeugen, von dem Zeitpunkt t₃₄ bis zu einem Zeitpunkt t₃₅, an dem die mittels des Bedienelements einstellbare Zielhubstellung des aktiven Hubwerks einem vierten Schwellenwert P₃₄ oberhalb oder unterhalb einer gespeicherten Hubstellung Pₛₚ, insbesondere einem Schwellenwert P₃₄ 10% oberhalb oder unterhalb der gespeicherten Hubstellung Pₛₚ, entspricht, das vierte Vibrationsintervall zu erzeugen und von dem Zeitpunkt t₃₅ bis zu einem Zeitpunkt t₃₅, der ein gewisses Zeitintervall nach dem Zeitpunkt t₃₅ liegt, vorzugsweise mindestens 300 ms nach dem Zeitpunkt t₃₅, besonders bevorzugt genau 300 ms nach dem Zeitpunkt t₃₅, das fünfte Vibrationsintervall zu erzeugen.

Die durch die Einrichtung während und nach einer Betätigung des Bedienelements zur Einstellung einer Zielhubstellung, die durch das aktive Hubwerk eingenommen werden soll, erzeugten ersten und zweiten Vibrationscharakteristiken verhindern demnach, dass der Benutzer das Bedienelement unnötig lange weiterbetätigt, obwohl die Zielhubstellung des aktiven Hubwerks mittels des Bedienelements bereits eingestellt ist. Die Trägheit des Visualisierungselements, das die aktuelle Hubstellung des aktiven Hubwerks widergibt, kann somit kompensiert werden. Zudem muss der Benutzer nicht die Fahrerkabine verlassen, um die Hubstellung unmittelbar am Hubwerk zu kontrollieren. Dies erspart dem Benutzer wertvolle Zeit und erhöht den Bedienkomfort der Arbeitsmaschine, da er das Bedienelement nicht länger als nötig betätigen muss.

Die von der Einrichtung erzeugte dritte Vibrationscharakteristik während und nach einer Betätigung des Bedienelements zur Einstellung einer Zielhubstellung des aktiven Hubwerks kann demnach verhindern, dass der Benutzer das Bedienelement länger weiterbetätigt als nötig und dabei die gewünschte gespeicherte Hubstellung über- oder unterschreitet bzw. zu sehr über- oder unterschreitet.

Es ist erfindungsgemäß vorgesehen, dass eine Frequenz der Vibration der ersten Vibrationscharakteristik größer ist als eine Frequenz der Vibration der zweiten Vibrationscharakteristik. Die Frequenz der Vibration der ersten Vibrationscharakteristik kann jedoch auch geringer oder identisch mit der Frequenz der Vibration der zweiten Vibrationscharakteristik sein.

Es ist ferner erfindungsgemäß vorgesehen, dass eine Frequenz der Vibration der dritten Vibrationscharakteristik einer Frequenz der Vibration der zweiten Vibrationscharakteristik entspricht. Die Frequenzen können jedoch auch verschieden sein.

Hierdurch kann die Ermittlung seitens des Benutzers, welcher vorabfestgelegten Hubstellung er sich bei einer Betätigung des Bedienelements nähert, ohne den Bewegungsablauf des aktiven Hubwerks verfolgen zu müssen, weiter vereinfacht werden.

Gemäß einer weiteren vorteilhaften Weiterbildung der Erfindung ist vorgesehen, dass das Bedienelement von einem Drehschalter gebildet ist, wobei vorzugsweise der Drehschalter als inkrementeller Drehschalter oder Endlosdrehschalter ausgebildet ist. Insbesondere hat sich herausgestellt, dass der Drehschalter besonders robust einsetzbar ist. Beim Betreiben der landwirtschaftlichen Arbeitsmaschine sind üblicherweise Verschmutzungen, beispielsweise Staub oder Dreck, nicht zu vermeiden. Mit anderen Worten ist der Drehschalter auch in einem verschmutzen Milieu besonders zuverlässig einsetzbar. Außerdem ist der Drehschalter aufgrund seiner hinlänglich bekannten Funktionsweise, nämlich durch Drehen, besonders intuitiv bedienbar.

Gemäß einer weiteren vorteilhaften Weiterbildung der Erfindung ist vorgesehen, dass das Visualisierungselement eine Lichtleiste umfasst, mittels der die aktuelle Hubstellung des jeweils aktiven Hubwerks anzeigbar ist, wobei vorzugsweise die Lichtleiste einen sich zwischen gegensätzlich Endstellungen bzw. einer entgegengesetzten Maximal- und Minimalhubstellung des aktiven Hubwerks befindlichen gesamten Arbeitsbereich desselben unterteilt in eine Mehrzahl von Stellungsschritten visualisiert. Das jeweilige Hubwerk ist vorzugsweise zwischen einer als Straßenbetriebsposition bezeichneten oberen Endstellung bzw. Maximalhubstellung, in welcher das Hubwerk zum Schutze desselben im Wesentlichen maximal angehoben ist, und einer als Arbeitsposition bezeichneten unteren Endstellung bzw. Minimalhubstellung, in welcher das Hubwerk zum Ankoppeln des Anbaugeräts im Wesentlich maximal abgesenkt ist, insbesondere stufenlos, verstellbar. Die Lichtleiste charakterisiert demzufolge die aktuelle Hubstellung des jeweiligen Hubwerks. Mit anderen Worten zeigt die Lichtleiste an, in welcher Hubstellung sich das jeweilige Hubwerk aktuell befindet. Hierdurch ergibt sich der Vorteil, dass der Benutzer die aktuelle Hubstellung der Hubwerke besonders übersichtlich und einfach erfahren kann. Dies wird insbesondere durch die Mehrzahl von Stellungsschritten beziehungsweise Abschnitten der Lichtleiste möglich, da der Benutzer eine Skalierung der Lichtleiste besonders einfach und genau abschätzen kann.

Zudem ist es gemäß einer weiteren vorteilhaften Weiterbildung der Erfindung vorgesehen, dass das Visualisierungselement eine Mehrzahl von balkenartig oder kreisbogenartig nebeneinander angeordneten Leuchtmitteln umfasst, wobei vorzugsweise jedes Leuchtmittel mit einem Stellungsschritt des aktiven Hubwerks korrespondiert. Insbesondere ist es denkbar, dass die Leuchtmittel derart zueinander angeordnet beziehungsweise ausgerichtet sind, dass durch eine Gesamtheit der Leuchtmittel ein gesamter Arbeitsbereich der Hubwerke abgebildet wird. Mit anderen Worten sind die Leuchtmittel entsprechend einem Verlauf angeordnet, der durch die Hubwerke realisiert werden kann. Hierdurch ergibt sich der Vorteil, dass die aktuelle Hubstellung des jeweiligen Hubwerks besonders einfach erkennbar ist.

In einer weiteren vorteilhaften Ausgestaltung der erfindungsgemäßen landwirtschaftlichen Arbeitsmaschine ist vorgesehen, dass das Visualisierungselement ein durchgängiger Bildschirm, insbesondere ein Liquid Crystal Display (LCD), ist. Mit anderen Worten ist das Visualisierungselement gemäß dieser Ausgestaltung nicht in einzelne Komponenten aufgeteilt.

Weiterhin ist es gemäß einer weiteren vorteilhaften Weiterbildung der Erfindung vorgesehen, dass das Visualisierungselement eine numerische Wiedergabe zur Wiedergabe von Zahlenwerten, insbesondere Prozentangaben oder Winkelangaben, umfasst. Für bestimmte Anwendungen, beispielsweise zum Ankuppeln des Anbaugeräts, kann es notwendig sein, das Hubwerk besonders exakt zu positionieren. Hierfür reicht eine ungefähre Angabe der Hubstellung, wie dies beispielsweise durch die Lichtleiste möglich ist, womöglich nicht aus. Außerdem kann der Benutzer sich den Zahlenwert besonders einfach merken oder notieren, um ihn für einen wiederholten Anwendungsfall erneut nutzen zu können. Durch die zusätzliche Wiedergabe von Zahlenwerten wird es dem Benutzer ermöglicht, das Hubwerk besonders präzise und reproduzierbar auszurichten.

Die beschriebene Ausgestaltung ist dann überdies von Vorteil, wenn das Visualisierungselement dazu geeignet ist, eine aktuelle Auswahl eines der Hubwerke zur Bedienung mittels des Bedienelements visuell, insbesondere mittels des Wechsels einer Farbe mindestens eines mehrfarbigen Leuchtmittels, anzuzeigen. Mit anderen Worten kann jedem der Hubwerke eine individuelle Farbe zugeordnet werden. Insbesondere ist die Farbe des Leuchtmittels selbst mittels eines peripheren Blicks wahrnehmbar. Der Benutzer muss somit seine Aufmerksamkeit nicht dem Leuchtmittel zuwenden, um zu erfahren, welches Hubwerk ausgewählt ist. Hierdurch ergibt sich der Vorteil, dass dem Benutzer anstrengungslos ersichtlich ist, welches Hubwerk zur Bedienung ausgewählt ist.

Zudem ist es gemäß der Erfindung vorgesehen, dass mindestens eine Speichereinheit vorgesehen ist, mittels der mindestens eine Stellungsinformation betreffend eine Hubstellung mindestens eines der Hubwerke speicherbar oder gespeichert ist. Die Möglichkeit des Abspeicherns von Stellungsinformationen hat mehrere Vorteile. Zum einen ermöglicht es der Bedieneinrichtung, mittels des Visualisierungselements beim Umschalten auf eines der Hubwerke eine Stellungsinformation anzuzeigen, die die Stellung des jeweiligen Hubwerks zum Zeitpunkt der letztmaligen Umschaltung auf das andere Hubwerk hatte. Auf diese Weise ist es besonders einfach möglich, dass die Visualisierungseinrichtung immer die aktuelle Hubstellung der Hubwerke wiedergibt. Weiterhin kann die Abspeicherung von Stellungsinformationen zum Vorteil haben, dass der Maschinenführer bestimmte Hubstellungen zwischenspeichert, um diese zu einem späteren Zeitpunkt automatisiert wieder anzufahren. Insbesondere beim Ankoppeln von Anbaugeräten kann es notwendig sein, das Hubwerk in Abhängigkeit von dem Anbaugerät besonders präzise auszurichten. Mittels der Speichereinheit lässt sich somit die Stellungsinformation abspeichern, welche beispielsweise mit dem jeweiligen Anbaugerät korrespondiert. Beim Ankoppeln ist demzufolge die erforderliche Hubstellung des jeweiligen Hubwerks direkt erzielbar. Vorteilhafterweise ergibt sich hierdurch ein besonders schneller und effizienter Betrieb.

Auch ist es denkbar, dass die Bedieneinrichtung von einem Dreh-Drückschalter gebildet ist, der zusätzlich zu der Funktionalität eines reinen Drehschalters auch die Funktion eines Drückschalters, insbesondere eines Tasters, aufweist. Vorzugsweise ist der Dreh-Drückschalter als inkrementeller oder Endlosdreh-Drückschalter ausgebildet. Auf diese Weise können das Bedienelement und der Auswahlschalter in einem Bauteil vereint werden, wobei sinngemäß das Bedienelement von dem Drehschalter und der Auswahlschalter von dem Druckschalter gebildet sind. Bei Ausbildung des Druckschalters als Taster kann beispielsweise mit jeder Betätigung der Fokus des Bedienelements von dem einen auf das andere Hubwerk umgeschaltet werden. In diesem Zusammenhang ist es insbesondere vorteilhaft, wenn durch ein Drücken des Dreh-Drückschalters eine aktuelle Hubstellung des Hubwerks gespeichert wird. Alternativ oder zusätzlich ist es außerdem denkbar, dass durch das Drücken des Dreh-Drückschalters eine bereits abgespeicherte Hubstellung ausgewählt beziehungsweise abgerufen wird und in Abhängigkeit davon das Hubwerk in diese Position gesteuert wird. Weiterhin kann auch eine Belegung des Dreh-Drückschalter durch mehrere Druckmodi vorgesehen sein. Der Dreh-Drückschalter kann beispielsweise durch einfaches beziehungsweise doppeltes oder mehrfach wiederholtes Drücken bedienbar sein.

Zudem ist es gemäß einer weiteren vorteilhaften Weiterbildung der Erfindung vorgesehen, dass auf der Speichereinheit mindestens eine Bereichsinformation betreffend einen Arbeitsbereich mindestens eines der Hubwerke gespeichert oder speicherbar ist. Es ist beispielsweise denkbar, dass das Hubwerk in den unterschiedlichen Stellungen unterschiedlich belastbar ist. Derartige Bereichsinformationen können beispielsweise mittels einer unteren Grenze beziehungsweise einer oberen Grenze realisiert werden. Daher ist es vorteilhaft, bestimmte Bereichsinformationen speichern zu können, um so einen besonders sicheren Betrieb gewährleisten zu können.

In einer besonders vorteilhaften Ausgestaltung ist vorgesehen, dass die Bedieneinrichtung eine physikalische Architektur aufweist, welche dreier Informationen bedarf. Erstens ist das Hubwerk auswählbar, also ausschlussweise entweder das Fronthubwerk oder das Heckhubwerk. Zweitens ist die Position des jeweilig ausgewählten Hubwerks auswählbar und zwar beispielsweise mittels eines Dreh-Drückschalters. Drittens ist eine bereits abgespeicherte Position in der physikalischen Architektur vorgesehen, welche beispielsweise mittels des Dreh-Drückschalters zum Wiederherstellen ausgewählt werden kann. In diesem Zusammenhang kann es weiterhin vorteilhaft sein, eine Zielposition mit der aktuellen Position zu vergleichen.

Gemäß einer weiteren vorteilhaften Weiterbildung der Erfindung ist der Linearresonanzaktuator dazu eingerichtet, eine vierte Vibrationscharakteristik nach einer erfolgten Speicherung der mindestens einen Stellungsinformation betreffend eine Hubstellung mindestens eines der Hubwerke in der mindestens einen Speichereinheit zu erzeugen, wobei die Vibration der vierten Vibrationscharakteristik gepulst und durch eine konstante Vibrationsintensität charakterisiert ist.

Insbesondere weist die vierte Vibrationscharakteristik mindestens drei aufeinanderfolgende Vibrationsintervalle aufweist, wobei die Intensität und eine Frequenz der Vibration in den mindestens drei aufeinanderfolgenden Vibrationsintervallen jeweils größer null und identisch sowie innerhalb eines jeden Vibrationsintervalls konstant sind, wobei jeweils zwischen aufeinanderfolgenden Vibrationsintervallen ein Zeitintervall ohne Vibration liegt, wobei vorzugsweise die Länge der Vibrationsintervalle und der Zeitintervalle ohne Vibration mindestens 300 ms, besonders bevorzugt genau 300 ms, beträgt.

Die von der Einrichtung erzeugte vierte Vibrationscharakteristik nach einer Speicherung einer Stellungsinformation betreffend die Hubstellung des aktiven Hubwerks kann dem Benutzer demnach signalisieren, dass die Speicherung in der Speichereinheit erfolgreich durchgeführt wurde und die gespeicherte Hubstellung zukünftigen Anwendungen wieder zugrunde gelegt werden kann. Auch diese Funktionalität bedeutet eine weitere Zeitersparnis und eine Erhöhung des Bedienkomforts des Arbeitsfahrzeugs.

Die erfindungsgemäße Aufgabe wird ferner durch eine Bedieneinrichtung einer landwirtschaftlichen Arbeitsmaschine gemäß dem unabhängigen Patentanspruch 12 gelöst.

Die vorliegende Erfindung wird nachstehend anhand der in den Figuren abgebildeten Ausführungsformen näher beschrieben.

Es zeigen:
- Fig. 1:: eine schematische und exemplarische Seitenansicht einer erfindungsgemäßen landwirtschaftlichen Arbeitsmaschine;
- Fig. 2:: links: eine schematische und exemplarische Perspektivansicht von vorne und rechts: eine zu links korrespondierende Lichtleiste;
- Fig. 3:: links: eine schematische und exemplarische Perspektivansicht von hinten und rechts: eine zu links korrespondierende Lichtleiste;
- Fig. 4:: eine schematische und exemplarische Detailansicht einer ersten Ausführungsform der erfindungsgemäßen Bedieneinrichtung;
- Fig. 5:: eine schematische und exemplarische Detailansicht einer zweiten Ausführungsform der erfindungsgemäßen Bedieneinrichtung;
- Fig. 6:: eine schematische und exemplarische Darstellung eines Fronthubwerks mit einer Kennzeichnung von Hubstellungen;
- Fig. 7:: eine schematische und exemplarische Darstellung einer mittels der erfindungsgemäßen Bedieneinrichtung erzeugten Vibrationscharakteristik gemäß einem ersten Anwendungsfall;
- Fig. 8:: eine schematische und exemplarische Darstellung einer mittels der erfindungsgemäßen Bedieneinrichtung erzeugten Vibrationscharakteristik gemäß einem zweiten Anwendungsfall;
- Fig. 9:: eine schematische und exemplarische Darstellung einer mittels der erfindungsgemäßen Bedieneinrichtung erzeugten Vibrationscharakteristik gemäß einem dritten Anwendungsfall; und
- Fig. 10:: eine schematische und exemplarische Darstellung einer mittels der erfindungsgemäßen Bedieneinrichtung erzeugten Vibrationscharakteristik gemäß einem vierten Anwendungsfall.

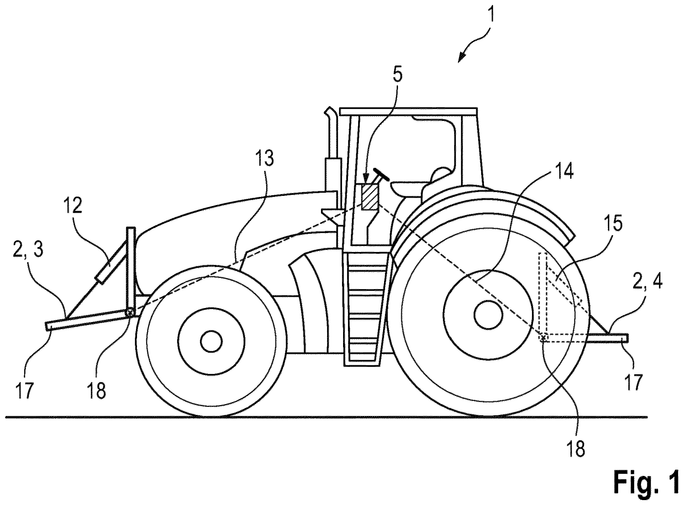

Eine Ausführungsform einer erfindungsgemäßen landwirtschaftlichen Arbeitsmaschine 1 sowie einer erfindungsgemäßen Bedieneinrichtung 5 ist in FIG. 1 dargestellt. Vorliegend handelt es sich bei der einfach auch als Arbeitsmaschine bezeichneten landwirtschaftlichen Arbeitsmaschine 1 um einen Traktor. Die Arbeitsmaschine 1 ist dazu ausgebildet, ein Anbaugerät anzukoppeln, mittels dessen ein Feld landwirtschaftlich bearbeitet werden kann. Beispielsweise handelt es sich bei dem Anbaugerät um eine Ballenpresse, einen Pflug oder eine Egge. Das Anbaugerät ist aus Gründen der Übersichtlichkeit nicht dargestellt.

Je nach Art des Anbaugeräts wird dieses entweder vorne oder hinten an der Arbeitsmaschine 1 angekoppelt. Auch ist es denkbar, dass zwei Anbaugeräte gleichzeitig angekoppelt sind, eins vorne und eins hinten. Hierzu umfasst die Arbeitsmaschine 1 zwei Hubwerke 2, nämlich ein Fronthubwerk 3 vorne sowie ein Heckhubwerk 4 hinten. Das Anbaugerät kann beispielsweise mittels einer Kupplung mit dem Fronthubwerk 3 beziehungsweise mit dem Heckhubwerk 4 verbunden werden. Mit anderen Worten kann man das Anbaugerät an das Fronthubwerk 3 beziehungsweise das Heckhubwerk 4 ankuppeln. Hierdurch kann das Anbaugerät von der Arbeitsmaschine 1 geschoben beziehungsweise gezogen werden.

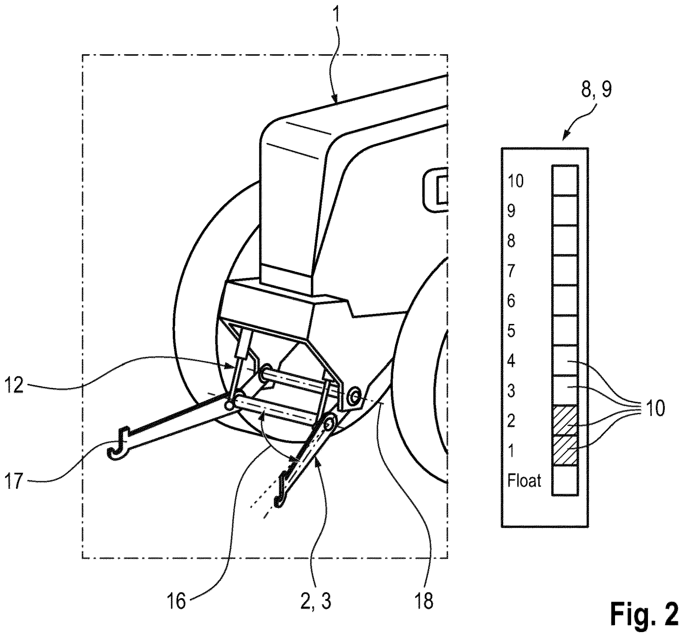

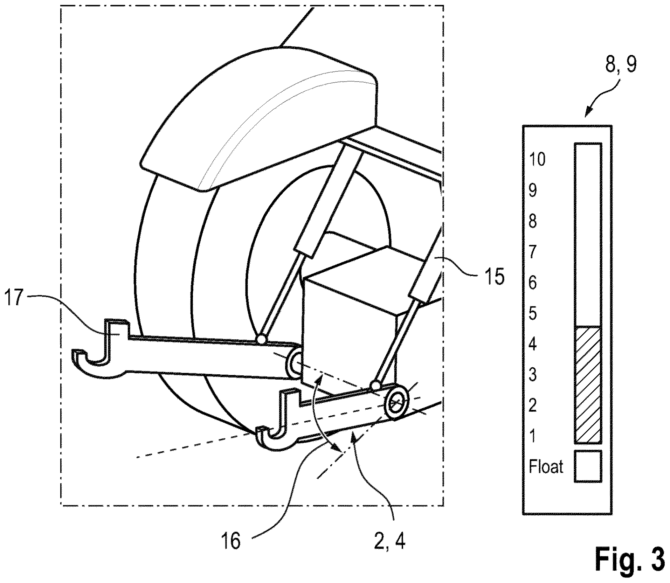

In FIG. 2 ist das Fronthubwerk 3 sowie in FIG. 3 das Heckhubwerk 4 dargestellt. Die Hubwerke 2 umfassen jeweils einen Ausleger 17, welcher um eine Achse 18 schwenkbar gelagert ist. Die Hubwerke 2 sind wie vorliegend üblicherweise fest mit einer Karosserie der Arbeitsmaschine 1 verbunden. Weiterhin weisen die Hubwerke 2 jeweils eine Hydraulikeinrichtung 12, 15 auf, welche mit dem jeweiligen Ausleger 17 verbunden ist und mittels derer der Ausleger 17 um die Achse 18 verschwenkbar ist.

Wie die FIG. 2 beziehungsweise FIG. 3 zeigt, ist der Ausleger 17 insbesondere in einem Arbeitsbereich 16 verschwenkbar. Mit anderen Worten ist der Ausleger 17 insbesondere zwischen einer unteren Endstellung bzw. einer Minimalhubstellung Pₘᵢₙ und einer oberen Endstellung bzw. einer Maximalhubstellung Pₘₐₓ verschwenkbar. Vorliegend ist in FIG. 2 beziehungsweise FIG. 3 jeweils eine Zwischenstellung dargestellt, die näher an der unteren Endstellung bzw. der Minimalhubstellung Pₘᵢₙ ist als an der oberen Endstellung bzw. der Maximalhubstellung Pₘₐₓ. Üblicherweise kann in dieser Zwischenstellung das Anbaugerät angekoppelt werden.

Während eines Betriebes muss der Benutzer sowohl die Arbeitsmaschine 1 als auch das etwaig angekoppelte Anbaugerät überwachen und insbesondere bedienen können. Dazu umfasst die Arbeitsmaschine 1 eine Bedieneinrichtung 5, mittels welcher der Benutzer die Hubwerke 2 bedienen kann. Vorliegend ist zwischen den Hubwerken 2 und der Bedieneinrichtung 5 jeweils eine Datenverbindung 13, 14 hergestellt. Mit anderen Worten ist sowohl das Fronthubwerk 3 mittels der Datenverbindung 13 als auch das Heckhubwerk 4 mittels der Datenverbindung 14 mit der Bedieneinrichtung 5 verbunden. Wie in FIG. 1 veranschaulicht ist, kann es sich bei der Datenverbindung 13, 14 insbesondere um eine leitungslose Datenverbindung handeln.

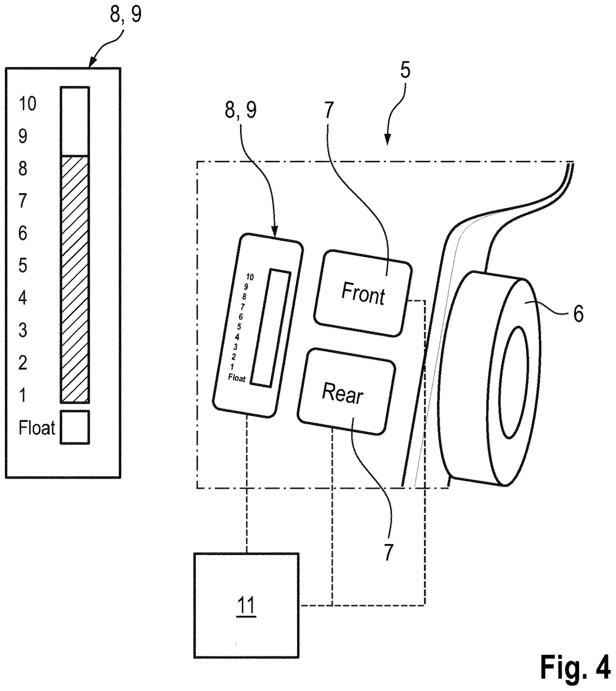

FIG. 4 zeigt die Bedieneinrichtung 5. Die Bedieneinrichtung 5 umfasst zwei Auswahlschalter 7, mittels welcher entweder das Fronthubwerk 3 oder das Heckhubwerk 4 ausgewählt werden kann. Eine aktuelle Auswahl kann beispielsweise wie vorliegend durch ein Visualisierungselement 8 visualisiert werden. Vorliegend ist das Visualisierungselement 8 eine Lichtleiste 9, wobei diese eine Vielzahl von Leuchtmitteln 10 umfassen kann, wie FIG. 2 rechts zeigt. Hierbei sind die Leuchtmittel 10 in Längsrichtung der Lichtleiste 9 übereinander angeordnet.

Die Leuchtleiste 9 charakterisiert insbesondere durch die einzelnen Leuchtmittel 10, in welcher Stellung innerhalb des Arbeitsbereiches 16 der Ausleger 17 befindlich ist. Dabei leuchten umso mehr der Leuchtmittel 10 auf, je weiter der Ausleger 17 in Richtung seiner oberen Endstellung bzw. seiner Maximalhubstellung Pₘₐₓ verschwenkt ist. Mit anderen Worten ist für den Benutzer auf der Leuchtleiste 9 durch eine Anzahl der aufleuchtenden Leuchtmittel 10 indiziert, in welcher Hubstellung sich das jeweilige Hubwerk 2 aktuell befindet.

Weiterhin umfasst die Bedieneinrichtung 5 ein Bedienelement 6, welches in FIG. 4 abgebildet und vorliegend als Drehschalter, insbesondere als Endlosdrehschalter, oder als Dreh-Drückschalter, vorzugsweise als Endlosdreh-Drückschalter, ausgebildet ist. Es ist jedoch auch vorstellbar, dass das Bedienelement 6 als inkrementeller Drehschalter oder inkrementeller Dreh-Drückschalter ausgebildet ist. Durch Drehen des Bedienelements 6 kann beispielsweise das Hubwerk 2 derart bedient werden, dass sich dessen Hubstellung verändert. Mit anderen Worten wird durch Drehen des Bedienelements 6 ein Absenken beziehungsweise Anheben des Hubwerks 2 bewirkt. Wieder mit anderen Worten wird durch Drehen des Bedienelements 6 der Ausleger 17 entsprechend um die Achse 18 verschwenkt.

Außerdem weist die Bedieneinrichtung 5 eine Speichereinheit 11 auf, mittels welcher beispielsweise die Stellung des Auslegers 17 abgespeichert werden kann. Insbesondere kann eine Speicherung der Stellung des Auslegers 17 in der Speichereinheit 11 mittels eines Drückens, insbesondere eines längeren Drückens, also einem Drücken von mehr als einer Sekunde, des als Dreh-Drückschalters ausgebildeten Bedienelements erfolgen. Die Speicherung könnte aber genauso über ein kurzes Drücken, also ein Drücken von bis zu einer Sekunde, oder aber einer Mehrzahl von aufeinanderfolgenden Druckimpulsen ausgelöst werden. Bei der Speichereinheit 11 kann es sich beispielsweise um einen physischen Speicher oder eine cloudbasierte Speicherung handeln. Beispielsweise kann mittels des Bedienelements 6 ein abgespeicherter Datensatz ausgewählt und abgerufen werden.

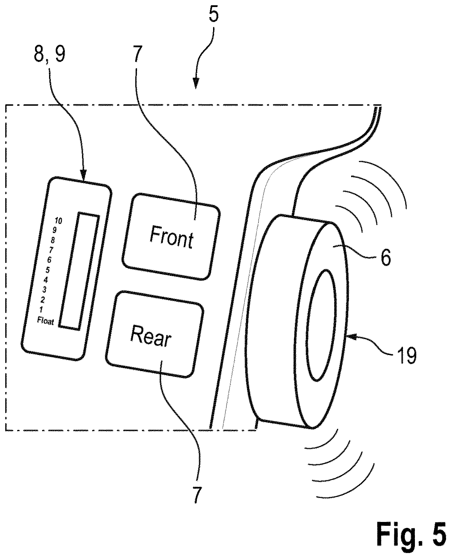

FIG. 5 zeigt eine weitere Ausführungsform der erfindungsgemäßen Bedieneinrichtung 5. Die in FIG. 5 dargestellte Ausführungsform der Bedieneinrichtung 5 weist eine zusätzliche Einrichtung 19 auf, die dazu eingerichtet ist, ein für den Benutzer der Arbeitsmaschine 1 wahrnehmbares haptisches Feedback zu erzeugen. Das haptische Feedback kann während und/oder nach einer durch den Benutzer der Arbeitsmaschine 1 durchgeführten Betätigung des Bedienelements 6 der Bedieneinrichtung 5 mittels der Einrichtung 19 erzeugt werden. Auch ist es vorstellbar, dass das haptische Feedback mittels der Einrichtung 19 erzeugt wird, ohne dass der Benutzer das Bedienelement 6 berührt bzw. betätigt. Diese Funktion kann insbesondere dazu genutzt werden, dem Benutzer eine Rückmeldung über Zustände, Einstellungen und/oder dergleichen zu geben, die unabhängig von einer Betätigung des Bedienelements 6 sind.

Die Einrichtung 19 ist in dem Bedienelement 6 der Bedieneinrichtung 5 ausgebildet. Gemäß einer bevorzugten Ausgestaltung ist die Einrichtung 19 als Linearresonanzaktuator ausgebildet und dazu eingerichtet, mindestens eine Vibrationscharakteristik als haptisches Feedback zu erzeugen. Die mittels der Einrichtung 19 erzeugte mindestens eine Vibrationscharakteristik kann insbesondere in Abhängigkeit seitens des Benutzers mittels des Bedienelements 6 durchgeführter Einstellvorgänge variieren. Sie kann jedoch genauso in Abhängigkeit eines dem Benutzer anzuzeigenden Zustands, einer Einstellung und/oder dergleichen variieren.

Eine Vibrationscharakteristik stellt im Kontext der Traktoren, insbesondere der Umgebungsbedingungen während des Einsatzes, ein besonders vorteilhaftes Feedback dar, da es durch den Benutzer unmittelbar bei und auch nach der Betätigung des Bedienelements 6 wahrgenommen werden kann. Ein im Rahmen dieser Erfindung als Vibrationscharakteristik bezeichnetes haptisches Feedback ist insbesondere dadurch gekennzeichnet, dass mittels einer Einstellung der Parameter Vibrationsintensität I und Vibrationsfrequenz f eine über einen Zeitraum T spezifische Vibration erzeugt wird. Hierbei können verschiedene Vibrationsintervalle unmittelbar aufeinanderfolgen oder aber auch durch Intervalle, in denen keine Vibration erzeugt wird, also Frequenz und Intensität null betragen, voneinander getrennt sein (d.h., eine gepulste Vibration). Ferner können sich die verschiedenen Vibrationsintervalle durch eine Vibration mit unterschiedlicher Intensität und/oder Frequenz voneinander unterscheiden oder eine Vibration mit gleicher Intensität und/oder Frequenz aufweisen.

Obwohl vorstehend und nachstehend eine Einrichtung 19 zur Erzeugung eines haptischen Feedbacks, insbesondere mindestens einer Vibrationscharakteristik, beschrieben wird, liegt es jedoch ebenfalls im Rahmen dieser Erfindung andere Einrichtungen im und/oder am Bedienelement 6 vorzusehen, die beispielsweise ein akustisches Feedback und/oder ein weiteres visuelles Feedback während, nach und/oder unabhängig von einer Betätigung des Bedienelements 6 an den Benutzer der Arbeitsmaschine 1 abgeben.

Wie bereits vorstehend beschrieben, kann ein Benutzer der Arbeitsmaschine 1 mittels einer Betätigung des Bedienelements 6 die aktuelle Hubstellung eines aktiven Hubwerks 2, 3, 4 einstellen. Hierbei wird mittels der Betätigung des Bedienelements 6 eine sogenannte Zielhubstellung des aktiven Hubwerks 2, 3, 4 vorgegeben bzw. eingestellt, welche das aktive Hubwerk 2, 3, 4 einnehmen soll. Aufgrund der Trägheit des Stellsignals, das über eine Betätigung des Bedienelements 6 erzeugt wird, die Zielhubstellung des aktiven Hubwerks 2, 3, 4 definiert und mittels der Datenverbindung 13, 14 an die Hydraulikeinrichtung 12, 15 zur Verstellung des aktiven Hubwerks 2, 3, 4 übermittelt wird, läuft die aktuelle Hubstellung des aktiven Hubwerks 2, 3, 4 der mittels des Bedienelements 6 eingestellten Zielhubstellung des aktiven Hubwerks 2, 3, 4 nach. Da das Visualisierungselement 8 die aktuelle Hubstellung des aktiven Hubwerks 2, 3, 4 abbildet, kann es somit vorkommen, dass der Benutzer, in dem Glauben die Zielhubstellung noch nicht erreicht zu haben, das Bedienelement 6 länger betätigt als nötig und somit eine Zielhubstellung vorgibt, die die eigentlich einzustellende bwz. gewünschte Zielhubstellung übersteigt. Mittels der im Bedienelement 6 vorgesehenen Einrichtung 19 kann diese Problematik vorteilhaft gelöst werden.

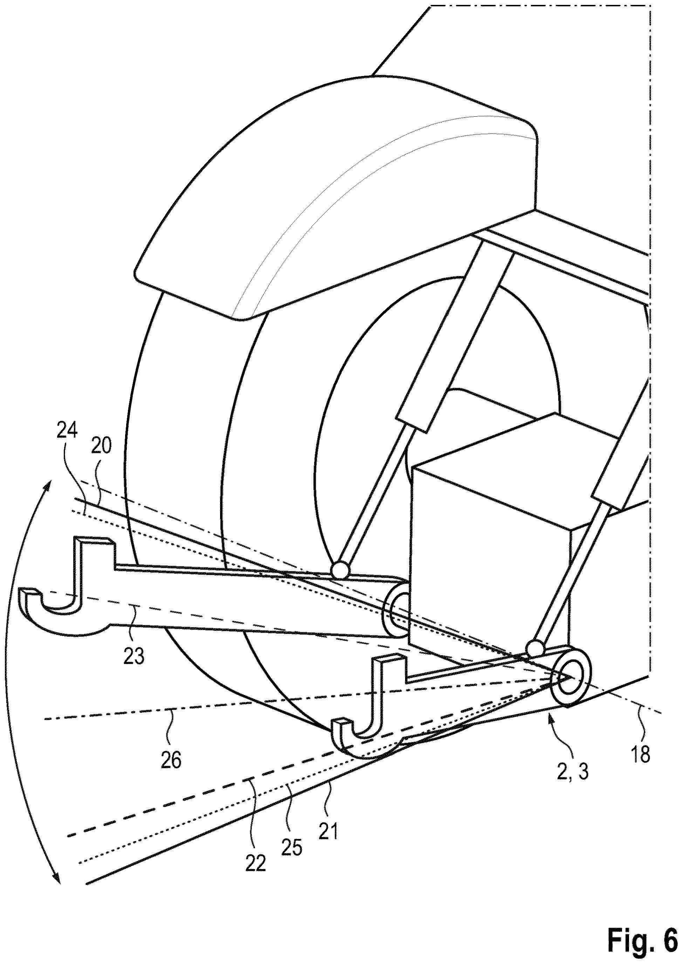

FIG. 6 entspricht im Wesentlichen der FIG. 2 und zeigt das Fronthubwerk 3 der Arbeitsmaschine 1, wobei jedoch verschiedene Linien eingezeichnet sind, die jeweils spezifische Hubstellungen, die mittels des Bedienelements 6 einstellbar sind und/oder durch das Fronthubwerk 3 eingenommen werden können, repräsentieren. Auch wenn in den FIGs. nicht dargestellt, gelten die in FIG. 6 abgebildeten Hubstellungen entsprechend auch für ein Heckhubwerk 4.

Die Linie 20 stellt eine obere Endstellung bzw. Maximalhubstellung Pₘₐₓ dar, die die systembedingte Maximalhubstellung kennzeichnet, die das Fronthubwerk 3 einnehmen kann. Die Linie 21 stellt eine untere Endstellung bzw. Minimalhubstellung Pₘᵢₙ dar, die die systembedingte Minimalhubstellung kennzeichnet, die das Fronthubwerk 3 einnehmen kann. Die Linie 22 stellt eine aktuelle Hubstellung des Hubwerks 3 dar, also die Hubstellung die das Fronthubwerk 3 zu einem bestimmten Zeitpunkt t tatsächlich einnimmt. Die Linie 23 gibt eine Zielhubstellung an, die mittels des Betätigungselements 6 eingestellt wird. Die Linie 24 stellt eine durch den Benutzer vorabfestlegbare bzw. vorabfestgelegte Maximalhubstellung Pᵥₘₐₓ dar. Diese Maximalhubstellung Pᵥₘₐₓ kann durch den Benutzer, beispielsweise in Abhängigkeit des angekuppelten Anbaugeräts, vorabfestgelegt werden, so dass das Fronthubwerk 3 diese Hubstellung nicht überschreiten kann. Die Linie 25 stellt eine durch den Benutzer vorabfestlegbare bzw. vorabfestgelegte Minimalhubstellung Pᵥₘᵢₙ. Diese Minimalhubstellung Pᵥₘᵢₙ kann durch den Benutzer, beispielsweise in Abhängigkeit des angekuppelten Anbaugeräts, vorabfestgelegt werden, so dass das Fronthubwerk 3 diese Hubstellung nicht unterschreiten kann. Schlussendlich stellt die Linie 26 eine durch den Benutzer speicherbare oder bereits gespeicherte Hubstellung Pₛₚ des Fronthubwerks 3 dar.

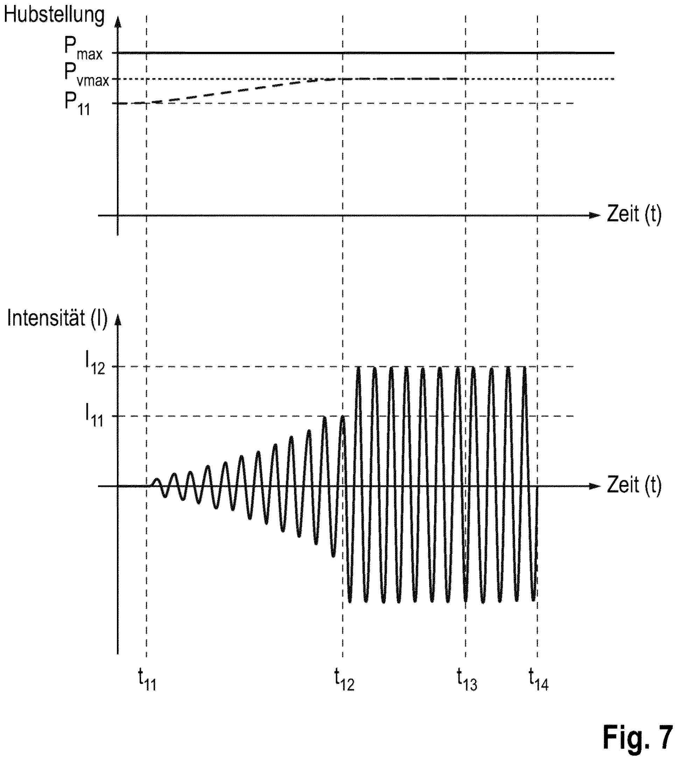

Unter Berücksichtigung dieser verschiedenen Hubstellungen werden nachfolgend verschiedene Anwendungsfälle beschrieben, die im Detail in den FIGs. 7 bis 10 abgebildet sind, wobei je nach Anwendungsfall eine spezifische Vibrationscharakteristik von der als Linearresonanzaktuator ausgebildeten Einrichtung 19 erzeugt wird. Die in den Diagrammen abgebildeten Linien entsprechen den Linien 20 bis 26 aus FIG. 6.

Gemäß einem ersten Anwendungsfall ist der Linearresonanzaktuator dazu eingerichtet ist, eine erste Vibrationscharakteristik bei einer Annäherung einer mittels des Bedienelements 6 einstellbaren Zielhubstellung des aktiven Hubwerks 2, 3, 4 an eine/die vorabfestlegbare bzw. vorabfestgelegte Maximalhubstellung Pᵥₘₐₓ des aktiven Hubwerks 3, 4 zu erzeugen. Die Vibration der ersten Vibrationscharakteristik ist grundsätzlich durch eine zunächst kontinuierlich ansteigende und anschließend konstante Vibrationsintensität charakterisiert.

Gemäß einem zweiten Anwendungsfall ist der Linearresonanzaktuator dazu eingerichtet, eine zweite Vibrationscharakteristik bei einer Annäherung einer mittels des Bedienelements 6 einstellbaren Zielhubstellung des aktiven Hubwerks 3, 4 an eine/die vorabfestlegbare bzw. vorabfestgelegte Minimalhubstellung Pᵥₘᵢₙ des aktiven Hubwerks 3, 4 zu erzeugen. Die Vibration der zweiten Vibrationscharakteristik ist grundsätzlich durch eine konstante Vibrationsintensität charakterisiert.

Gemäß einem dritten Anwendungsfall ist der Linearresonanzaktuator dazu eingerichtet, eine dritte Vibrationscharakteristik bei einer Annäherung einer mittels des Bedienelements 6 einstellbaren Zielhubstellung des aktiven Hubwerks 3, 4 an eine/die gespeicherte Hubstellung Pₛₚ des aktiven Hubwerks 3, 4 zu erzeugen. Die Vibration der dritten Vibrationscharakteristik ist grundsätzlich durch eine zunächst kontinuierlich ansteigende, dann konstante und anschließend kontinuierlich abnehmende Vibrationsintensität charakterisiert.

Charakteristisch für die zuvor genannten drei Anwendungsfälle ist ferner, dass die Vibrationsintensität der Vibration der jeweiligen Vibrationscharakteristik bei Erreichen der vorabfestlegbaren bzw. vorabfestgelegten Hubstellungen und/oder der gespeicherten Hubstellung oder bei Erreichen eines Schwellwerts unmittelbar vor der vorabfestlegbaren bzw. vorabfestgelegten Hubstellungen und/oder der gespeicherten Hubstellung konstant ist. Hierdurch kann der Benutzer unmittelbar feststellen, dass die eingestellte Zielhubstellung zumindest im Wesentlichen der gewünschten einzustellenden Hubstellung entspricht.

Gemäß einem vierten Anwendungsfall ist der Linearresonanzaktuator dazu eingerichtet ist, eine vierte Vibrationscharakteristik nach einer erfolgten Speicherung der mindestens einen Stellungsinformation betreffend eine Hubstellung mindestens eines der Hubwerke 3, 4 in der mindestens einen Speichereinheit 11 zu erzeugen. Die Vibration der vierten Vibrationscharakteristik ist grundsätzlich gepulst und durch eine konstante Vibrationsintensität charakterisiert.

Aufgrund der je nach Anwendungsfall variierenden Vibrationscharakteristik kann der Benutzer der Arbeitsmaschine 1 unmittelbar erkennen, wie er mittels der Betätigung des Bedienelements 6 gegenwärtig die Zielhubstellung verstellt bzw. einstellt und ob er im Begriff ist die tatsächlich gewünschte Hubstellung einzustellen. Zudem kann der Benutzer unmittelbar erkennen, ob eine Speicherung einer Hubstellung in der Speichereinheit 11 erfolgreich durchgeführt wurde.

Eine Vielzahl von weiteren Anwendungsfällen kann vorgesehen sein, die jedoch im Folgenden nicht näher beschrieben wird. Jeder dieser weiteren Anwendungsfälle liegt im Rahmen dieser Erfindung.

Im Folgenden wird zu jedem der vorstehend genannten Anwendungsfälle die Erzeugung einer bespielhaften spezifischen Vibrationscharakteristik im Detail beschrieben. Andere spezifische Vibrationscharakteristiken für die einzelnen Anwendungsfälle sind jedoch ebenso denkbar.

FIG. 7 zeigt den zuvor genannten ersten Anwendungsfall gemäß dem eine aktuelle Hubstellung des aktiven Hubwerks 2, 3, 4 auf eine/die vorabfestlegbare bzw. vorabfestgelegte Maximalhubstellung Pᵥₘₐₓ eingestellt werden soll. Die vorabfestlegbare bzw. vorabfestgelegte Maximalhubstellung Pᵥₘₐₓ kann beispielsweise 90% der Maximalhubstellung Pₘₐₓ entsprechen. Sie kann jedoch auch der Maximalhubstellung Pₘₐₓ entsprechen oder aber andere Werte zwischen einer vorabfestlegbaren bzw. vorabfestgelegten Minimalhubstellung Pᵥₘᵢₙ und der Maximalhubstellung Pₘₐₓ annehmen. Mittels der Betätigung des Bedienelements 6 stellt der Benutzer die Zielhubstellung des aktiven Hubwerks 2, 3, 4 ein. Während der Betätigung des Bedienelements 6 und zwar zu einem Zeitpunkt t₁₁, an dem die Zielhubstellung des aktiven Hubwerks 2, 3, 4 einen ersten Schwellenwert P₁₁ annimmt, beginnt die Einrichtung 19 die erste Vibrationscharakteristik zu erzeugen. Der Schwellenwert P₁₁ liegt vorzugsweise 10% unterhalb der vorabfestlegbare bzw. vorabfestgelegten Maximalhubstellung Pᵥₘₐₓ. Andere Werte kleiner oder größer 10% sind jedoch ebenfalls vorstellbar.

Die erste Vibrationscharakteristik weist insbesondere drei aufeinanderfolgende Vibrationsintervalle auf, die vorzugsweise unmittelbar aufeinanderfolgen. Das erste Vibrationsintervall ist durch eine Vibration gekennzeichnet, dessen Intensität von null kontinuierlich und proportional bis zu einem ersten Intensitätswert I₁₁ steigt (d.h. eine linear ansteigende Schwingung). Ein auf das erste Vibrationsintervall folgendes zweites Vibrationsintervall ist durch eine Vibration gekennzeichnet, dessen Intensität über das Intervall hinweg konstant einen zweiten Intensitätswert I₁₂ annimmt, dessen Betrag höher ist als der des ersten Intensitätswerts I₁₁ (d.h. eine harmonische Schwingung). Ein auf das zweite Vibrationsintervall folgendes drittes Vibrationsintervall ist durch eine Vibration mit der Intensität der Vibration des zweiten Vibrationsintervalls gekennzeichnet (d.h. eine harmonische Schwingung). Die Frequenz der Vibration in den einzelnen Vibrationsintervallen der ersten Vibrationscharakteristik ist identisch.

Sofern die mittels des Betätigungselements 6 eingestellte Zielhubstellung den ersten Schwellenwert P₁₁ zu dem Zeitpunkt t₁₁ erreicht bzw. eingenommen hat, beginnt die Einrichtung 19 die erste Vibrationscharakteristik zu erzeugen, indem sie das erste Vibrationsintervall erzeugt. Das erste Vibrationsintervall wird bis zu einem Zeitpunkt t₁₂ erzeugt, an dem die mittels des Betätigungselements 6 eingestellte Zielhubstellung des aktiven Hubwerks 2, 3, 4 die vorabfestlegbare bzw. vorabfestgelegte Maximalhubstellung Pᵥₘₐₓ erreicht bzw. eingenommen hat. Sobald die Zielhubstellung der vorabfestlegbaren bzw. vorabfestgelegten Maximalhubstellung Pᵥₘₐₓ entspricht, erzeugt die Einrichtung 19 das zweite Vibrationsintervall. Das zweite Vibrationsintervall wird solange erzeugt bis der Benutzer die Betätigung des Bedienelements 6 zu einem Zeitpunkt t₁₃ stoppt, da er aufgrund der im zweiten Vibrationsintervall erzeugten Vibration festgestellt hat, dass er die gewünschte Hubstellung eingestellt hat. Nachdem die Betätigung des Bedienelements 6 durch den Benutzer gestoppt wurde, erzeugt die Einrichtung 19 das dritte Vibrationsintervall und zwar bis zu einem Zeitpunkt t₁₄, der ein gewisses Zeitintervall nach dem Betätigungsende, also dem Zeitpunkt t₁₃, liegt. Dieses Zeitintervall beträgt vorzugsweise mindestens 300 ms, besonders bevorzugt genau 300 ms. Andere Zeitintervalle sind jedoch ebenfalls vorstellbar.

Die durch die Einrichtung 19 während und nach einer Betätigung des Bedienelements 6 zur Einstellung einer Zielhubstellung, die durch das aktive Hubwerk 2, 3, 4 eingenommen werden soll, erzeugte erste Vibrationscharakteristik verhindert demnach, dass der Benutzer das Bedienelement 6 unnötig lange weiterbetätigt, obwohl die gewünschte Zielhubstellung des aktiven Hubwerks 2, 3, 4 bereits eingestellt ist. Ferner lässt sie den Benutzer erkennen, dass sich die Zielhubstellung in Richtung der vorabfestlegbaren bzw. vorabfestgelegten Maximalhubstellung Pᵥₘₐₓ verstellt.

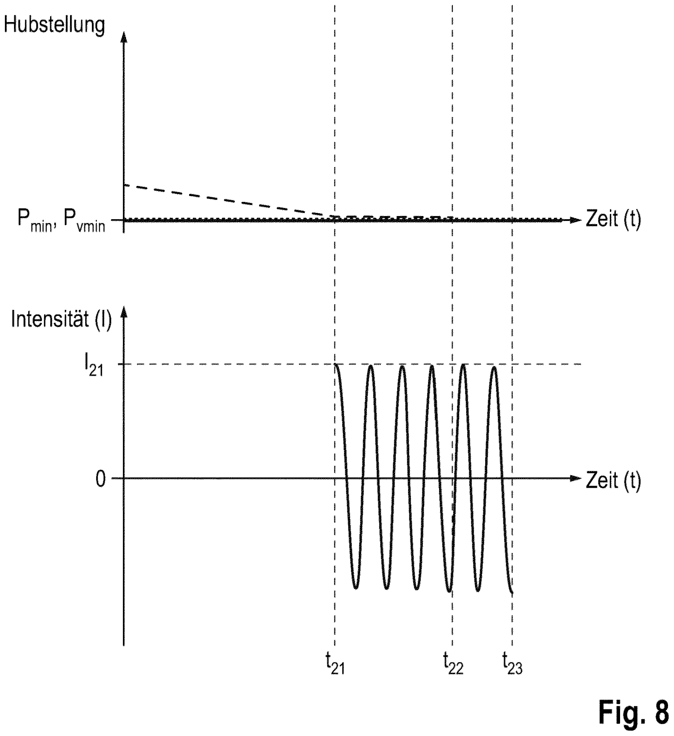

FIG. 8 zeigt den zuvor genannten zweiten Anwendungsfall gemäß dem eine aktuelle Hubstellung des aktiven Hubwerks 2, 3, 4 auf eine/die vorabfestlegbaren bzw. vorabfestgelegte Minimalhubstellung Pᵥₘᵢₙ eingestellt werden soll. Die vorabfestgelegte Minimalhubstellung Pᵥₘᵢₙ kann beispielsweise 10% oberhalb der Minimalhubstellung Pₘᵢₙ liegen. Sie kann jedoch auch der Minimalhubstellung Pₘᵢₙ entsprechen oder aber andere Werte zwischen einer vorabfestlegbaren bzw. vorabfestgelegten Maximalhubstellung Pᵥₘₐₓ und der Minimalhubstellung Pₘₐₓ annehmen. Mittels der Betätigung des Bedienelements 6 stellt der Benutzer die Zielhubstellung des aktiven Hubwerks 2, 3, 4 ein. Während der Betätigung des Bedienelements 6 und zwar zu einem Zeitpunkt t₂₁, an dem die Zielhubstellung des aktiven Hubwerks 2, 3, 4 die vorabfestgelegte Minimalhubstellung Pᵥₘᵢₙ erreicht bzw. eingenommen hat, beginnt die Einrichtung 19 die zweite Vibrationscharakteristik zu erzeugen.

Die zweite Vibrationscharakteristik weist zwei aufeinanderfolgende Vibrationsintervalle auf, die vorzugsweise unmittelbar aufeinanderfolgen. Das erste Vibrationsintervall ist durch eine Vibration gekennzeichnet, dessen Intensität über das Intervall hinweg konstant einen ersten Intensitätswert I₂₁ annimmt (d.h. eine harmonische Schwingung). Ein auf das erste Vibrationsintervall folgendes zweites Vibrationsintervall ist durch eine Vibration mit der Intensität der Vibration des ersten Vibrationsintervalls gekennzeichnet (d.h. eine harmonische Schwingung). Die Frequenz der Vibration in den einzelnen Vibrationsintervallen der ersten Vibrationscharakteristik ist identisch.

Sofern die mittels des Betätigungselements 6 eingestellte Zielhubstellung die vorabfestlegbare bzw. vorabfestgelegte Minimalhubstellung Pᵥₘᵢₙ zu dem Zeitpunkt t₂₁ erreicht bzw. eingenommen hat, beginnt die Einrichtung 19 die zweite Vibrationscharakteristik zu erzeugen, indem sie das erste Vibrationsintervall erzeugt. Das erste Vibrationsintervall wird bis zu einem Zeitpunkt t₂₂ erzeugt, an dem der Benutzer die Betätigung des Bedienelements 6 zu einem Zeitpunkt stoppt, da er aufgrund der im ersten Vibrationsintervall erzeugten Vibration festgestellt hat, dass er die gewünschte Hubstellung eingestellt hat. Nachdem die Betätigung des Bedienelements 6 durch den Benutzer gestoppt wurde, erzeugt die Einrichtung 19 das zweite Vibrationsintervall und zwar bis zu einem Zeitpunkt t₂₃, der ein gewisses Zeitintervall nach dem Betätigungsende, also dem Zeitpunkt t₂₂, liegt. Dieses Zeitintervall beträgt vorzugsweise mindestens 300 ms, besonders bevorzugt genau 300 ms. Andere Zeitintervalle sind jedoch ebenfalls vorstellbar.

Entsprechend zum ersten Anwendungsfall wird durch die von der Einrichtung 19 erzeugte zweite Vibrationscharakteristik während und nach einer Betätigung des Bedienelements 6 zur Einstellung einer Zielhubstellung des aktiven Hubwerks 2, 3, 4 demnach verhindert, dass der Benutzer das Bedienelement 6 unnötig lange weiterbetätigt, obwohl die gewünschte Zielhubstellung des aktiven Hubwerks 2, 3, 4 bereits eingestellt ist. Ferner lässt sie den Benutzer erkennen, dass sich die Zielhubstellung in Richtung der vorabfestlegbaren bzw. vorabfestgelegten Minimalhubstellung Pᵥₘᵢₙ verstellt.

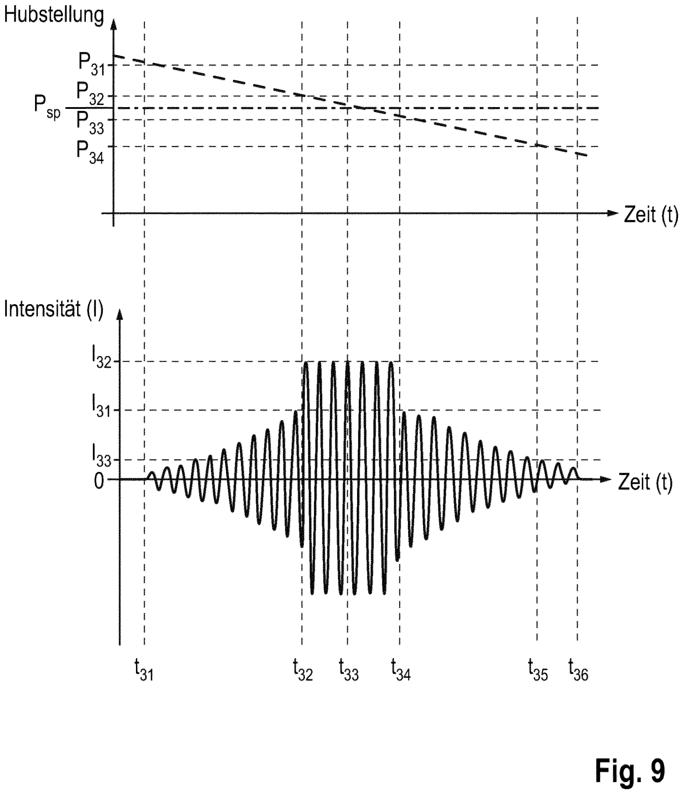

FIG. 9 zeigt den zuvor genannten dritten Anwendungsfall gemäß dem eine aktuelle Hubstellung des aktiven Hubwerks 2, 3, 4 auf eine/die gespeicherte Hubstellung Pₛₚ eingestellt werden soll. Die gespeicherte Hubstellung Pₛₚ kann beispielsweise 40% der Maximalhubstellung Pₘₐₓ entsprechen. Sie kann jedoch auch jeden anderen Wert zwischen der Maximal- und Minimalhubstellung Pₘₐₓ/Pₘᵢₙ einnehmen. Die gespeicherte Hubstellung Pₛₚ entspricht beispielsweise einer für den Betrieb des jeweiligen angekuppelten Anbaugeräts optimalen Hubstellung. Mittels der Betätigung des Bedienelements 6 stellt der Benutzer die Zielhubstellung des aktiven Hubwerks 2, 3, 4 ein. Während der Betätigung des Bedienelements 6 und zwar zu einem Zeitpunkt t₃₁, an dem die Zielhubstellung des aktiven Hubwerks 2, 3, 4 einen ersten Schwellenwert P₃₁ annimmt, beginnt die Einrichtung 19 die dritte Vibrationscharakteristik zu erzeugen. Der Schwellenwert P₃₁ liegt vorzugsweise 10% oberhalb oder unterhalb der gespeicherten Hubstellung Pₛₚ. Andere Werte kleiner oder größer 10% sind jedoch ebenfalls vorstellbar.

Die dritte Vibrationscharakteristik weist fünf aufeinanderfolgende Vibrationsintervalle auf, die vorzugsweise unmittelbar aufeinanderfolgen. Das erste Vibrationsintervall ist durch eine Vibration gekennzeichnet, dessen Intensität von null kontinuierlich und proportional bis zu einem ersten Intensitätswert I₃₁ steigt (d.h. eine linear ansteigende Schwingung). Ein auf das erste Vibrationsintervall folgendes zweites Vibrationsintervall ist durch eine Vibration gekennzeichnet, dessen Intensität über das Intervall hinweg konstant einen zweiten Intensitätswert I₃₂ annimmt, dessen Betrag höher ist als der des ersten Intensitätswerts I₃₁ (d.h. eine harmonische Schwingung). Ein auf das zweite Vibrationsintervall folgendes drittes Vibrationsintervall ist durch eine Vibration mit der Intensität der Vibration des zweiten Vibrationsintervalls gekennzeichnet (d.h. eine harmonische Schwingung). Ein auf das dritte Vibrationsintervall folgendes viertes Vibrationsintervall ist durch eine Vibration gekennzeichnet, dessen Intensität von dem ersten Intensitätswert I₃₁ kontinuierlich und proportional bis zu einem dritten Intensitätswert I₃₃ sinkt, dessen Betrag niedriger ist als der des ersten Intensitätswert I₃₁ (d.h. eine linear gedämpfte Schwingung). Ein auf das vierte Vibrationsintervall folgendes fünftes Vibrationsintervall ist durch eine Vibration gekennzeichnet, dessen Intensität von dem dritten Intensitätswert I₃₃ kontinuierlich und proportional bis auf null sinkt (d.h. eine linear gedämpfte Schwingung). Die Frequenz der Vibration in den einzelnen Vibrationsintervallen der ersten Vibrationscharakteristik ist identisch.

Sofern die mittels des Betätigungselements 6 eingestellte Zielhubstellung den ersten Schwellenwert P₃₁ zu dem Zeitpunkt t₃₁ erreicht bzw. eingenommen hat, beginnt die Einrichtung 19 die dritte Vibrationscharakteristik zu erzeugen, indem sie das erste Vibrationsintervall erzeugt. Das erste Vibrationsintervall wird bis zu einem Zeitpunkt t₃₂ erzeugt, an dem die mittels des Betätigungselements 6 eingestellte Zielhubstellung des aktiven Hubwerks 2, 3, 4 einen zweiten Schwellenwert P₃₂ erreicht bzw. eingenommen hat. Der Schwellenwert P₃₂ liegt vorzugsweise 2% oberhalb oder unterhalb der speicherbaren bzw. gespeicherten Hubstellung Pₛₚ. Andere Werte kleiner oder größer 2% sind jedoch ebenfalls vorstellbar. Sobald die Zielhubstellung den zweiten Schwellenwert P₃₂ erreicht bzw. eingenommen hat, erzeugt die Einrichtung 19 das zweite Vibrationsintervall. Das zweite Vibrationsintervall wird solange erzeugt bis die mittels des Betätigungselements 6 eingestellte Zielhubstellung die gespeicherte Hubstellung Pₛₚ zu einem Zeitpunkt t₃₃ erreicht bzw. eingenommen hat. Das dritte Vibrationsintervall wird von dem Zeitpunkt t₃₃ an erzeugt bis zu einem Zeitpunkt t₃₄, an dem die mittels des Betätigungselements 6 eingestellte Zielhubstellung des aktiven Hubwerks 2, 3, 4 einen dritten Schwellenwert P₃₃ erreicht bzw. eingenommen hat. Der Schwellenwert P₃₂ liegt vorzugsweise 2% unterhalb oder oberhalb der speicherbaren bzw. gespeicherten Hubstellung Pₛₚ. Sofern der Benutzer das Bedienelement 6 weiter betätigt, erzeugt die Einrichtung 19 das vierte Vibrationsintervall und zwar von dem Zeitpunkt t₃₄ an bis zu einem Zeitpunkt t₃₅, an dem die Zielhubstellung des aktiven Hubwerks 2, 3, 4 einen vierten Schwellenwert P₃₄ annimmt. Der Schwellenwert P₃₄ liegt vorzugsweise 10% unterhalb der speicherbaren bzw. gespeicherten Hubstellung Pₛₚ. Andere Werte kleiner oder größer 10% sind jedoch ebenfalls vorstellbar. Von dem Zeitpunkt t₃₅ bis zu einem Zeitpunkt t₃₅, der ein gewisses Zeitintervall nach dem Zeitpunkt t₃₅ liegt, erzeugt die Einrichtung 19 das fünfte Vibrationsintervall. Dieses Zeitintervall beträgt vorzugsweise mindestens 300 ms, besonders bevorzugt genau 300 ms. Andere Zeitintervalle sind jedoch ebenfalls vorstellbar.

Sollte der Benutzer die Betätigung des Bedienelements 6 zum Zeitpunkt t₃₄ oder t₃₅ beenden, kann vorgesehen sein, dass die dritte Vibrationscharakteristik unmittelbar endet, von dem ersten Intensitätswert I₃₁, dem zweiten Intensitätswert I₃₂ oder aber dem dritten Intensitätswert I₃₃ kontinuierlich und proportional auf null abklingt. Auch könnte es vorgesehen sein, das zwei Vibrationsintervalle dem dritten Vibrationsintervall nachlaufen, obwohl die Betätigung des Bedienelements 6 bereits abgeschlossen sind, die dem vierten und fünften Vibrationsintervall der dritten Vibrationscharakteristik entsprechen. Jedes dieser Vibrationsintervalle dauert dann vorzugsweise mindestens 300 ms, besonders bevorzugt genau 300 ms, an. Andere Zeitspannen sind jedoch ebenfalls vorstellbar.

Die von der Einrichtung 19 erzeugte dritte Vibrationscharakteristik während und nach einer Betätigung des Bedienelements 6 zur Einstellung einer Zielhubstellung des aktiven Hubwerks 2, 3, 4 kann demnach verhindern, dass der Benutzer das Bedienelement 6 länger weiterbetätigt als nötig und dabei die gewünschte gespeicherte Hubstellung über- oder unterschreitet bzw. zu sehr über- oder unterschreitet. Auch wenn in FIG. 9 nur eine Annäherung der Zielhubstellung von oberhalb der gespeicherten Hubstellung Pₛₚ abgebildet ist, gilt das Prinzip entsprechend bei einer Annäherung von unterhalb der speicherbaren bzw. gespeicherten Hubstellung Pₛₚ. Ferner lässt sie den Benutzer erkennen, dass sich die Zielhubstellung in Richtung der speicherbaren bzw. gespeicherten Hubstellung Pₛₚ verstellt.

Wie bereits beschrieben weist jede der zuvor beschriebenen Vibrationscharakteristiken eine Vibration auf, deren Frequenz in allen Vibrationsintervallen identisch ist. So weist beispielsweise die erste Vibrationscharakteristik eine Vibration mit einer Frequenz auf, die im Vergleich zur Frequenz der Vibration der zweiten Vibrationscharakteristik höher ist. Die Frequenz der Vibration der dritten Vibrationscharakteristik ist ebenfalls eine im Vergleich zur Frequenz der Vibration der zweiten Vibrationscharakteristik höhere Frequenz, vorzugsweise eine Frequenz die identisch mit der Frequenz der ersten Vibrationscharakteristik ist.

Jede Vibrationscharakteristik kann jedoch auch eine eigene Frequenz aufweisen, die von jeder der Frequenzen der anderen Vibrationscharakteristiken verschieden ist. Auch ist es vorstellbar, dass die Frequenz der Vibration von Vibrationsintervallen innerhalb einer Vibrationscharakteristik variiert. Entsprechendes kann auch für die Intensität von Vibrationsintervallen innerhalb einer Vibrationscharakteristik gelten.

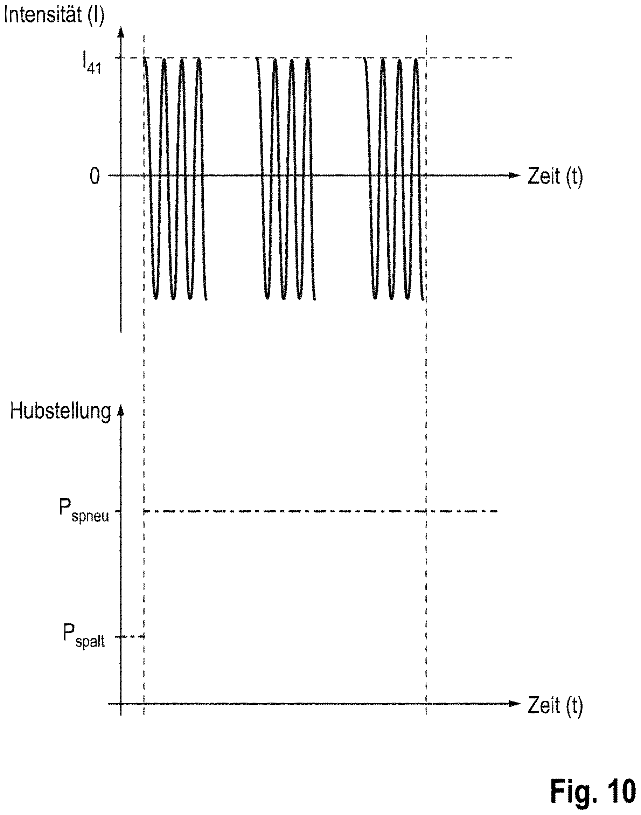

FIG. 10 zeigt den zuvor genannten vierten Anwendungsfall gemäß dem, im Unterschied zu den beschriebenen Anwendungsfällen, nicht die aktuelle Hubstellung des aktiven Hubwerks 2, 3, 4 mittels des Bedienelements 6 verändert wird. Vielmehr betrifft der vierte Anwendungsfall ein Speichern einer angefahrenen Hubstellung in der Speichereinheit 11. So wird die vierte Vibrationscharakteristik durch die Einrichtung 19 nach einer erfolgten Speicherung einer Stellungsinformation betreffend die Hubstellung des aktiven Hubwerks 2, 3, 4 in der Speichereinheit 11 erzeugt. Sobald die Stellungsinformation in der Speichereinheit 11 gespeichert wurde, erzeugt die Einrichtung 19 die vierte Vibrationscharakteristik.

Die vierte Vibrationscharakteristik weist drei aufeinanderfolgende Vibrationsintervalle auf, wobei die Frequenz und die Intensität der Vibration jedes Vibrationsintervalls größer null und identisch zueinander sowie innerhalb eines jeden Vibrationsintervalls konstant sind (d.h. eine harmonische Schwingung). Jedes Vibrationsintervall ist von einem nachfolgenden Vibrationsintervall durch ein Zeitintervall getrennt, in dem keine Vibration erzeugt wird, also eine Intensität und eine Frequenz der Vibration null beträgt, so dass eine zumindest im Wesentlichen gepulste Vibration erzeugt wird. Die Länge eines jeden Vibrationsintervalls und eines jeden Zeitintervalls dauert vorzugsweise mindestens 300 ms, besonders bevorzugt genau 300 ms, an. Andere Zeitspannen sind jedoch ebenfalls vorstellbar. Die Länge der Vibrationsintervalle und die Länge der Zeitintervalle zwischen aufeinanderfolgenden Vibrationsintervallen kann auch unterschiedlich ausfallen. Auch kann die Frequenz und/oder Intensität von aufeinanderfolgenden Vibrationsintervalle variieren. Einzelne oder alle Vibrationsintervalle können auch unmittelbar aufeinanderfolgen.

Die von der Einrichtung 19 erzeugte vierte Vibrationscharakteristik nach einer Speicherung einer Stellungsinformation betreffend die Hubstellung des aktiven Hubwerks 2, 3, 4 kann dem Benutzer demnach signalisieren, dass die Speicherung in der Speichereinheit 11 erfolgreich durchgeführt wurde und die gespeicherte Hubstellung zukünftigen Anwendungen wieder zugrunde gelegt werden kann.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

### Bezugszeichenliste

1 Arbeitsmaschine
2 Hubwerk
3 Fronthubwerk
4 Heckhubwerk
5 Bedieneinrichtung
6 Bedienelement
7 Auswahlschalter
8 Visualisierungselement
9 Lichtleiste
10 Leuchtmittel
11 Speichereinheit
12 Hydraulikeinrichtung
13 Datenverbindung
14 Datenverbindung
15 Hydraulikeinrichtung
16 Arbeitsbereich
17 Ausleger
18 Achse
19 Einrichtung
20 obere Endstellung bzw. Maximalhubstellung (Pₘₐₓ)
21 untere Endstellung bzw. Minimalhubstellung (Pₘᵢₙ)
22 Aktuelle Hubstellung
23 Zielhubstellung
24 Vorabfestlegbare bzw. vorabfestgelegte Maximalhubstellung (Pᵥₘₐₓ)
25 Vorabfestlegbare bzw. vorabfestgelegte Minimalhubstellung (Pᵥₘᵢₙ)
26 Speicherbare bzw. gespeicherte Hubstellung (Pₛₚ)

## Patentansprüche

1. Landwirtschaftliche Arbeitsmaschine (1), insbesondere ein Traktor, die Folgendes umfasst:
- ein Fronthubwerk (3),
- ein Heckhubwerk (4), und
- eine Bedieneinrichtung (5),
wobei die Bedieneinrichtung (5) ein Bedienelement (6) zur Bedienung beider Hubwerke (3, 4) umfasst,
wobei die Bedieneinrichtung (5) mindestens einen Auswahlschalter (7) umfasst, mittels dessen ein Fokus des Bedienelements (6) zwischen den Hubwerken (3, 4) umschaltbar ist,
wobei die Bedieneinrichtung (5) mindestens ein Visualisierungselement (8) umfasst, mittels dessen eine aktuelle Hubstellung des aktiven Hubwerks (3, 4), auf dem der Fokus des Bedienelements (6) liegt, visualisierbar ist,
wobei das Bedienelement (6) eine Einrichtung (19) aufweist, die dazu eingerichtet ist, mindestens ein für einen Benutzer der landwirtschaftlichen Arbeitsmaschine (1) wahrnehmbares haptisches Feedback zu erzeugen,
wobei die Einrichtung (19) als Linearresonanzaktuator ausgebildet ist, wobei das mindestens eine haptische Feedback mindestens eine Vibrationscharakteristik ist,
**dadurch gekennzeichnet, dass**
der Linearresonanzaktuator dazu eingerichtet ist, eine erste Vibrationscharakteristik bei einer Annäherung einer mittels des Bedienelements (6) einstellbaren Zielhubstellung des aktiven Hubwerks (3, 4) an eine vorabfestlegbare Maximalhubstellung Pᵥₘₐₓ des aktiven Hubwerks (3, 4) zu erzeugen, wobei die Vibration der ersten Vibrationscharakteristik durch eine zunächst kontinuierlich ansteigende und anschließend konstante Vibrationsintensität charakterisiert ist,
der Linearresonanzaktuator dazu eingerichtet ist, eine zweite Vibrationscharakteristik bei einer Annäherung einer mittels des Bedienelements (6) einstellbaren Zielhubstellung des aktiven Hubwerks (3, 4) an eine vorabfestlegbare Minimalhubstellung Pᵥₘᵢₙ des aktiven Hubwerks (3, 4) zu erzeugen, wobei die Vibration der zweiten Vibrationscharakteristik durch eine konstante Vibrationsintensität charakterisiert ist,
die landwirtschaftliche Arbeitsmaschine (1) mindestens eine Speichereinheit (11) umfasst, mittels der mindestens eine Stellungsinformation betreffend eine Hubstellung mindestens eines der Hubwerke (3, 4) speicherbar oder gespeichert ist, und
der Linearresonanzaktuator dazu eingerichtet ist, eine dritte Vibrationscharakteristik bei einer Annäherung einer mittels des Bedienelements (6) einstellbaren Zielhubstellung des aktiven Hubwerks (3, 4) an eine gespeicherte Hubstellung Pₛₚ des aktiven Hubwerks (3, 4) zu erzeugen, wobei die Vibration der dritten Vibrationscharakteristik durch eine zunächst kontinuierlich ansteigende, dann konstante und anschließend kontinuierlich abnehmende Vibrationsintensität charakterisiert ist.

2. Landwirtschaftliche Arbeitsmaschine (1) nach Anspruch 1, **dadurch gekennzeichnet, dass** die erste Vibrationscharakteristik drei, vorzugsweise unmittelbar, aufeinanderfolgende Vibrationsintervalle aufweist, wobei in einem ersten Vibrationsintervall die Intensität der Vibration kontinuierlich und proportional von null bis zu einem ersten Intensitätswert I₁₁ steigt, wobei in einem auf das erste Vibrationsintervall folgenden zweiten Vibrationsintervall die Intensität der Vibration konstant bei einem zweiten Intensitätswert I₁₂ liegt, dessen Betrag höher ist als der des ersten Intensitätswerts I₁₁, wobei die Intensität der Vibration in einem auf das zweite Vibrationsintervall folgenden dritten Vibrationsintervall der Intensität der Vibration des zweiten Vibrationsintervalls entspricht, wobei eine Frequenz der Vibration in den drei Vibrationsintervallen identisch ist, wobei der Linearresonanzaktuator dazu eingerichtet ist, von einem Zeitpunkt t₁₁, an dem die mittels des Bedienelements (6) einstellbare Zielhubstellung des aktiven Hubwerks (3, 4) einem Schwellenwert P₁₁ unterhalb der vorabfestlegbaren Maximalhubstellung Pᵥₘₐₓ des aktiven Hubwerks (3, 4), insbesondere einem Schwellenwert 10% unterhalb der vorabfestlegbaren Maximalhubstellung Pᵥₘₐₓ, entspricht, bis zu einem Zeitpunkt t₁₂, an dem die mittels des Bedienelements (6) einstellbare Zielhubstellung des aktiven Hubwerks (3, 4) der vorabfestlegbaren Maximalhubstellung Pᵥₘₐₓ entspricht, das erste Vibrationsintervall zu erzeugen, von dem Zeitpunkt t₁₂ bis zu einem Zeitpunkt t₁₃, an dem eine Betätigung des Bedienelements (6) abgeschlossen ist, das zweite Vibrationsintervall zu erzeugen und von dem Zeitpunkt t₁₃ bis zu einem Zeitpunkt t₁₄, der ein gewisses Zeitintervall nach dem Zeitpunkt t₁₃ liegt, vorzugsweise mindestens 300 ms nach dem Zeitpunkt t₁₃, besonders bevorzugt genau 300 ms nach dem Zeitpunkt t₁₃, das dritte Vibrationsintervall zu erzeugen.

3. Landwirtschaftliche Arbeitsmaschine (1) nach Anspruch 1 oder 2, **dadurch gekennzeichnet, dass** die zweite Vibrationscharakteristik zwei, vorzugsweise unmittelbar, aufeinanderfolgende Vibrationsintervalle aufweist, wobei in einem ersten Vibrationsintervall die Intensität der Vibration konstant bei einem Intensitätswert I₂₁ liegt, der größer null ist, wobei die Intensität der Vibration in einem auf das erste Vibrationsintervall folgenden zweiten Vibrationsintervall der Intensität der Vibration des ersten Vibrationsintervalls entspricht, wobei eine Frequenz der Vibration in den beiden Vibrationsintervallen identisch ist, wobei der Linearresonanzaktuator dazu eingerichtet ist, von einem Zeitpunkt t₂₁, an dem die mittels des Bedienelements (6) einstellbare Zielhubstellung des aktiven Hubwerks (3, 4) der vorabfestlegbaren Minimalhubstellung Pᵥₘᵢₙ des aktiven Hubwerks (3, 4) entspricht, bis zu einem Zeitpunkt t₂₂, an dem eine Betätigung des Bedienelements (6) abgeschlossen ist, das erste Vibrationsintervall zu erzeugen und von dem Zeitpunkt t₂₂ bis zu einem Zeitpunkt t₂₃, der ein gewisses Zeitintervall nach dem Zeitpunkt t₂₂ liegt, vorzugsweise mindestens 300 ms nach dem Zeitpunkt t₂₂, besonders bevorzugt genau 300 ms nach dem Zeitpunkt t₂₂, das zweite Vibrationsintervall zu erzeugen.

4. Landwirtschaftliche Arbeitsmaschine (1) nach einem der vorhergehenden Ansprüche, **dadurch gekennzeichnet, dass** eine Frequenz der Vibration der ersten Vibrationscharakteristik größer ist als eine Frequenz der Vibration der zweiten Vibrationscharakteristik.

5. Landwirtschaftliche Arbeitsmaschine (1) nach einem der vorhergehenden Ansprüche, **dadurch gekennzeichnet, dass** das Visualisierungselement (8) eine Lichtleiste (9) umfasst, mittels der die aktuelle Hubstellung des jeweils aktiven Hubwerks (3, 4) anzeigbar ist, wobei vorzugsweise die Lichtleiste (9) einen sich zwischen gegensätzlich Endstellungen des aktiven Hubwerks (3, 4) befindlichen gesamten Arbeitsbereich desselben unterteilt in eine Mehrzahl von Stellungsschritten visualisiert, wobei besonders bevorzugt das Visualisierungselement (8) eine Mehrzahl von balkenartig oder kreisbogenartig nebeneinander angeordneten Leuchtmitteln (10) umfasst, wobei vorzugsweise jedes Leuchtmittel (10) mit einem Stellungsschritt des aktiven Hubwerks (3, 4) korrespondiert.

6. Landwirtschaftliche Arbeitsmaschine (1) nach einem der vorangehenden Ansprüche, **dadurch gekennzeichnet, dass** das Visualisierungselement (8) eine numerische Wiedergabe zur Wiedergabe von Zahlenwerten, insbesondere Prozentangaben oder Winkelangaben, umfasst, und/oder das Visualisierungselement (8) dazu geeignet ist, eine aktuelle Auswahl eines der Hubwerke (3, 4) zur Bedienung mittels des Bedienelements (6) visuell, insbesondere mittels des Wechsels einer Farbe mindestens eines mehrfarbigen Leuchtmittels (10), anzuzeigen.

7. Landwirtschaftliche Arbeitsmaschine (1) nach einem der vorangehenden Ansprüche, **dadurch gekennzeichnet, dass** auf der Speichereinheit (11) mindestens eine Bereichsinformation betreffend einen Arbeitsbereich mindestens eines der Hubwerke (3, 4) gespeichert oder speicherbar ist.

8. Landwirtschaftliche Arbeitsmaschine (1) nach einem der vorhergehenden Ansprüche, **dadurch gekennzeichnet, dass** die dritte Vibrationscharakteristik fünf, vorzugsweise unmittelbar, aufeinanderfolgende Vibrationsintervalle aufweist, wobei in einem ersten Vibrationsintervall die Intensität der Vibration kontinuierlich und proportional von null bis zu einem ersten Intensitätswert I₃₁ steigt, wobei in einem auf das erste Vibrationsintervall folgenden zweiten Vibrationsintervall die Intensität der Vibration konstant bei einem zweiten Intensitätswert I₃₂ liegt, dessen Betrag größer ist als der des ersten Intensitätswerts I₃₁, wobei die Intensität der Vibration in einem auf das zweite Vibrationsintervall folgenden dritten Vibrationsintervall der Intensität der Vibration des zweiten Vibrationsintervalls entspricht, wobei in einem auf das dritte Vibrationsintervall folgenden vierten Vibrationsintervall die Intensität der Vibration kontinuierlich und proportional von dem ersten Intensitätswert I₃₁ auf einen dritten Intensitätswert I₃₃ sinkt, dessen Betrag geringer ist als der des ersten Intensitätswerts I₃₁, wobei in einem auf das vierte Intensitätsintervall folgenden fünften Vibrationsintervall die Intensität der Vibration kontinuierlich und proportional von dem dritten Intensitätswert I₃₃ auf null sinkt, wobei eine Frequenz der Vibration in den fünf Vibrationsintervallen identisch ist, wobei der Linearresonanzaktuator dazu eingerichtet ist, von einem Zeitpunkt t₃₁, an dem die mittels des Bedienelements (6) einstellbare Zielhubstellung des aktiven Hubwerks (3, 4) einem ersten Schwellenwert P₃₁ unterhalb oder oberhalb der gespeicherten Hubstellung Pₛₚ des aktiven Hubwerks (3, 4), insbesondere einem Schwellenwert P₃₁ 10% unterhalb oder oberhalb der gespeicherten Hubstellung Pₛₚ, entspricht, bis zu einem Zeitpunkt t₃₂, an dem die mittels des Bedienelements (6) einstellbare Zielhubstellung des aktiven Hubwerks (3, 4) einem zweiten Schwellenwert P₃₂ unterhalb oder oberhalb der gespeicherten Hubstellung Pₛₚ, insbesondere einem zweiten Schwellenwert P₃₂ 2% unterhalb oder oberhalb der gespeicherten Hubstellung Pₛₚ, entspricht, das erste Vibrationsintervall zu erzeugen, von dem Zeitpunkt t₃₂ bis zu dem Zeitpunkt t₃₃, an dem die mittels des Bedienelements (6) einstellbare Zielhubstellung des aktiven Hubwerks (3, 4) der gespeicherten Hubstellung Pₛₚ entspricht, das zweite Vibrationsintervall zu erzeugen, von dem Zeitpunkt t₃₃ bis zu einem Zeitpunkt t₃₄, an dem die mittels des Bedienelements (6) einstellbare Zielhubstellung des aktiven Hubwerks (3, 4) einem dritten Schwellenwert P₃₃ oberhalb oder unterhalb der gespeicherten Hubstellung Pₛₚ, insbesondere einem dritten Schwellenwert P₃₃ 2% oberhalb oder unterhalb der gespeicherten Hubstellung Pₛₚ, entspricht, das dritte Vibrationsintervall zu erzeugen, von dem Zeitpunkt t₃₄ bis zu einem Zeitpunkt t₃₅, an dem die mittels des Bedienelements (6) einstellbare Zielhubstellung des aktiven Hubwerks (3, 4) einem vierten Schwellenwert P₃₄ oberhalb oder unterhalb einer gespeicherten Hubstellung Pₛₚ, insbesondere einem Schwellenwert P₃₄ 10% oberhalb oder unterhalb der gespeicherten Hubstellung Pₛₚ, entspricht, das vierte Vibrationsintervall zu erzeugen und von dem Zeitpunkt t₃₅ bis zu einem Zeitpunkt t₃₅, der ein gewisses Zeitintervall nach dem Zeitpunkt t₃₅ liegt, vorzugsweise mindestens 300 ms nach dem Zeitpunkt t₃₅, besonders bevorzugt genau 300 ms nach dem Zeitpunkt t₃₅, das fünfte Vibrationsintervall zu erzeugen.

9. Landwirtschaftliche Arbeitsmaschine (1) nach einem der vorhergehenden Ansprüche, **dadurch gekennzeichnet, dass** eine Frequenz der Vibration der dritten Vibrationscharakteristik einer Frequenz der Vibration der zweiten Vibrationscharakteristik entspricht.

10. Landwirtschaftliche Arbeitsmaschine (1) nach einem der vorhergehenden Ansprüche, **dadurch gekennzeichnet, dass** der Linearresonanzaktuator dazu eingerichtet ist, eine vierte Vibrationscharakteristik nach einer erfolgten Speicherung der mindestens einen Stellungsinformation betreffend eine Hubstellung mindestens eines der Hubwerke (3, 4) in der mindestens einen Speichereinheit (11) zu erzeugen, wobei die Vibration der vierten Vibrationscharakteristik gepulst und durch eine konstante Vibrationsintensität charakterisiert ist.

11. Landwirtschaftliche Arbeitsmaschine (1) nach Anspruch 10, **dadurch gekennzeichnet, dass** die vierte Vibrationscharakteristik mindestens drei aufeinanderfolgende Vibrationsintervalle aufweist, wobei die Intensität und eine Frequenz der Vibration in den mindestens drei aufeinanderfolgenden Vibrationsintervallen jeweils größer null und identisch sowie innerhalb eines jeden Vibrationsintervalls konstant sind, wobei jeweils zwischen aufeinanderfolgenden Vibrationsintervallen ein Zeitintervall ohne Vibration liegt, wobei vorzugsweise die Länge der Vibrationsintervalle und der Zeitintervalle ohne Vibration mindestens 300 ms, besonders bevorzugt genau 300 ms, beträgt.

12. Bedieneinrichtung (5) einer landwirtschaftlichen Arbeitsmaschine (1),
wobei die Bedieneinrichtung (5) ein Bedienelement (6) zur Bedienung zweier Hubwerke (2, 3, 4) der Arbeitsmaschine (1) umfasst,
wobei die Bedieneinrichtung (5) mindestens einen Auswahlschalter (7) umfasst, mittels dessen ein Fokus des Bedienelements (6) zwischen den Hubwerken (2, 3, 4) umschaltbar ist,
wobei die Bedieneinrichtung (5) ein Visualisierungselement (8) umfasst, mittels dessen eine aktuelle Hubstellung desjenigen Hubwerks (2, 3, 4), auf dem der Fokus des Bedienelements (6) liegt, visualisierbar ist,
wobei das Bedienelement (6) eine Einrichtung (19) aufweist, die dazu eingerichtet ist, mindestens ein für einen Benutzer der landwirtschaftlichen Arbeitsmaschine (1) wahrnehmbares haptisches Feedback zu erzeugen,
wobei die Einrichtung (19) als Linearresonanzaktuator ausgebildet ist, wobei das mindestens eine haptische Feedback mindestens eine Vibrationscharakteristik ist,
**dadurch gekennzeichnet, dass**
der Linearresonanzaktuator dazu eingerichtet ist, eine erste Vibrationscharakteristik bei einer Annäherung einer mittels des Bedienelements (6) einstellbaren Zielhubstellung des aktiven Hubwerks (3, 4) an eine vorabfestlegbare Maximalhubstellung Pᵥₘₐₓ des aktiven Hubwerks (3, 4) zu erzeugen, wobei die Vibration der ersten Vibrationscharakteristik durch eine zunächst kontinuierlich ansteigende und anschließend konstante Vibrationsintensität charakterisiert ist,
der Linearresonanzaktuator dazu eingerichtet ist, eine zweite Vibrationscharakteristik bei einer Annäherung einer mittels des Bedienelements (6) einstellbaren Zielhubstellung des aktiven Hubwerks (3, 4) an eine vorabfestlegbare Minimalhubstellung Pᵥₘᵢₙ des aktiven Hubwerks (3, 4) zu erzeugen, wobei die Vibration der zweiten Vibrationscharakteristik durch eine konstante Vibrationsintensität charakterisiert ist, und
der Linearresonanzaktuator dazu eingerichtet ist, eine dritte Vibrationscharakteristik bei einer Annäherung einer mittels des Bedienelements (6) einstellbaren Zielhubstellung des aktiven Hubwerks (3, 4) an eine mittels einer Speichereinheit (11) der Arbeitsmaschine (1) gespeicherte Hubstellung Pₛₚ des aktiven Hubwerks (3, 4) zu erzeugen, wobei die Vibration der dritten Vibrationscharakteristik durch eine zunächst kontinuierlich ansteigende, dann konstante und anschließend kontinuierlich abnehmende Vibrationsintensität charakterisiert ist.

## Claims

1. An agricultural working machine (1), in particular a tractor, which comprises the following:
- a front lifting device (3),
- a rear lifting device (4), and
- an operating device (5),
wherein the operating device (5) comprises an operating element (6) for operating both lifting devices (3, 4),
wherein the operating device (5) comprises at least one selector switch (7) by means of which a focus of the operating element (6) can be switched between the lifting devices (3, 4),
wherein the operating device (5) comprises at least one visualization element (8), by means of which a current lift position of the active lifting device (3, 4) on which the operating element (6) is focussed can be visualized,
wherein the operating element (6) has a means (19) which is configured to generate at least one piece of haptic feedback which can be discerned by a user of the agricultural working machine (1),
wherein the means (19) is configured as a linear resonant actuator, wherein the at least one piece of haptic feedback is at least one vibration characteristic,
**characterized in that**
the linear resonant actuator is configured to generate a first vibration characteristic when a target lift position of the active lifting device (3, 4) which can be set by means of the operating element (6) approaches a predeterminable maximum lift position Pᵥₘₐₓ of the active lifting device (3, 4), wherein the vibration of the first vibration characteristic is **characterized by** an initially continuously increasing and then constant vibration intensity, the linear resonant actuator is configured to generate a second vibration characteristic when a target lift position of the active lifting device (3, 4) which can be set by means of the operating element (6) approaches a predeterminable minimum lift position Pᵥₘᵢₙ of the active lifting device (3, 4), wherein the vibration of the second vibration characteristic is **characterized by** a constant vibration intensity,
the agricultural working machine (1) comprises at least one storage unit (11), by means of which at least one piece of positional information pertaining to a lift position of at least one of the lifting devices (3, 4) can be stored or is stored, and the linear resonant actuator is configured to generate a third vibration characteristic when a target lift position of the active lifting device (3, 4) which can be set by means of the operating element (6) approaches a stored lift position Pₛₚ of the active lifting device (3, 4), wherein the vibration of the third vibration characteristic is **characterized by** an initially continuously increasing, then constant and subsequently a continuously decreasing vibration intensity.

2. The agricultural working machine (1) according to claim 1, **characterized in that** the first vibration characteristic has three, preferably directly consecutive vibration intervals, wherein in a first vibration interval, the intensity of the vibration increases continuously and proportionally from zero up to a first intensity value I₁₁, wherein, in a second vibration interval following the first vibration interval, the intensity of the vibration is constant at a second intensity value I₁₂ the value of which is higher than that of the first intensity value I₁₁, wherein the intensity of the vibration in a third vibration interval following the second vibration interval corresponds to the intensity of the vibration of the second vibration interval, wherein a frequency of the vibration in the three vibration intervals is identical, wherein the linear resonant actuator is configured to generate the first vibration interval from a time t₁₁ at which the target lift position of the active lifting device (3, 4) which can be set by means of the operating element (6) corresponds to a threshold value P₁₁ below the predeterminable maximum lift position Pᵥₘₐₓ of the active lifting device (3, 4), in particular a threshold value 10% below the predeterminable maximum lift position Pᵥₘₐₓ, up to a time t₁₂, at which the target lift position of the active lifting device (3, 4) which can be set by means of the operating element (6) corresponds to the predeterminable maximum lift position Pᵥₘₐₓ, to generate the second vibration interval from the time t₁₂ up to a time t₁₃ at which an actuation of the operating element (6) is complete, and to generate the third vibration interval from the time t₁₃ up to a time t₁₄ which is a certain time interval after the time t₁₃, preferably at least 300 ms after the time t₁₃, particularly preferably exactly 300 ms after the time t₁₃.

3. The agricultural working machine (1) according to claim 1 or claim 2, **characterized in that** the second vibration characteristic has two preferably directly consecutive vibration intervals, wherein in a first vibration interval, the intensity of the vibration is constant at an intensity value I₂₁ which is greater than zero, wherein the intensity of the vibration in a second vibration interval following the first vibration interval corresponds to the intensity of the vibration of the first vibration interval, wherein a frequency of the vibration in the two vibration intervals is identical, wherein the linear resonant actuator is configured to generate the first vibration interval from a time t₂₁ at which the target lift position of the active lifting device (3, 4) which can be set by means of the operating element (6) corresponds to the predeterminable minimum lift position Pᵥₘᵢₙ of the active lifting device (3, 4), up to a time t₂₂ at which an actuation of the operating element (6) is complete, and to generate the second vibration interval from the time t₂₂ up to a time t₂₃ which is a certain time interval after the time t₂₂, preferably at least 300 ms after the time t₂₂, particularly preferably exactly 300 ms after the time t₂₂.

4. The agricultural working machine (1) according to one of the preceding claims, **characterized in that** a frequency of the vibration of the first vibration characteristic is greater than a frequency of the vibration of the second vibration characteristic.

5. The agricultural working machine (1) according to one of the preceding claims, **characterized in that** the visualization element (8) comprises a light strip (9), by means of which the current lift position of the respectively active lifting device (3, 4) can be indicated, wherein preferably, the light strip (9) visualizes an entire operating range of the active lifting device (3, 4) between opposing end positions thereof divided into a plurality of setting increments, wherein particularly preferably, the visualization element (8) comprises a plurality of bar-like or arc-like illuminants (10) disposed next to one another, wherein preferably, each illuminants (10) corresponds to a setting increment of the active lifting device (3, 4).

6. The agricultural working machine (1) according to one of the preceding claims, **characterized in that** the visualization element (8) comprises a numerical representation for the reproduction of numerical values, in particular percentage information or angular information, and/or the visualization element (8) is suitable for displaying a current selection of one of the lifting devices (3, 4) for operating by means of the operating element (6) visually, in particular by means of a change of a colour of at least one multicoloured illuminant (10).

7. The agricultural working machine (1) according to one of the preceding claims, **characterized in that** at least one piece of range information pertaining to an operating range of at least one of the lifting devices (3, 4) is stored or can be stored on the storage unit (11).

8. The agricultural working machine (1) according to one of the preceding claims, **characterized in that** the third vibration characteristic has five preferably directly consecutive vibration intervals, wherein in a first vibration interval, the intensity of the vibration increases continuously and proportionally from zero up to a first intensity value I₃₁, wherein in a second vibration interval following the first vibration interval, the intensity of the vibration is constant at a second intensity value I₃₂ the value of which is higher than that of the first intensity value I₃₁, wherein the intensity of the vibration in a third vibration interval following the second vibration interval corresponds to the intensity of the vibration of the second vibration interval, wherein in a fourth vibration interval following the third vibration interval, the intensity of the vibration falls continuously and proportionally from the first intensity value I₃₁ to a third intensity value I₃₃ the value of which is lower than that of the first intensity value I₃₁, wherein in a fifth vibration interval following the fourth intensity interval, the intensity of the vibration falls continuously and proportionally from the third intensity value I₃₃ to zero, wherein a frequency of the vibration in the five vibration intervals is identical, wherein the linear resonant actuator is configured to generate the first vibration interval from a time t₃₁ at which the target lift position of the active lifting device (3, 4) which can be set by means of the operating element (6) corresponds to a first threshold value P₃₁ below or above the stored lift position Pₛₚ of the active lifting device (3, 4), in particular a threshold value P₃₁ 10% below or above the stored lift position Pₛₚ, up to a time t₃₂ at which the target lift position of the active lifting device (3, 4) which can be set by means of the operating element (6) corresponds to a second threshold value P₃₂ below or above the stored lift position Pₛₚ, in particular a second threshold value P₃₂ 2% below or above the stored lift position Pₛₚ, to generate the second vibration interval from the time t₃₂ up to a time t₃₃ at which the target lift position of the active lifting device (3, 4) which can be set by means of the operating element (6) corresponds to the stored lift position Pₛₚ, to generate the third vibration interval from the time t₃₃ up to the time t₃₄ at which the target lift position of the active lifting device (3, 4) which can be set by means of the operating element (6) corresponds to a third threshold value P₃₃ above or below the stored lift position Pₛₚ, in particular a third threshold value P₃₃ 2% above or below the stored lift position Pₛₚ, to generate the fourth vibration interval from the time t₃₄ up to a time t₃₅ at which the target lift position of the active lifting device (3, 4) which can be set by means of the operating element (6) corresponds to a fourth threshold value P₃₄ above or below a stored lift position Pₛₚ, in particular a threshold value P₃₄ 10% above or below the stored lift position Pₛₚ, and to generate the fifth vibration interval from the time t₃₅ to a time t₃₆ which is a certain time interval after the time t₃₅, preferably at least 300 ms after the time t₃₅, particularly preferably exactly 300 ms after the time t₃₅.

9. The agricultural working machine (1) according to one of the preceding claims, **characterized in that** a frequency of the vibration of the third vibration characteristic corresponds to a frequency of the vibration of the second vibration characteristic.

10. The agricultural working machine (1) according to one of the preceding claims, **characterized in that** the linear resonant actuator is configured to generate a fourth vibration characteristic after completing the storage of the at least one piece of positional information pertaining to a lift position of at least one of the lifting devices (3, 4) in the at least one storage unit (11), wherein the vibration of the fourth vibration characteristic is pulsed and is **characterized by** a constant vibration intensity.

11. The agricultural working machine (1) according to claim 10, **characterized in that** the fourth vibration characteristic has at least three consecutive vibration intervals, wherein the intensity and a frequency of the vibration in the at least three consecutive vibration intervals is respectively greater than zero and identical and is also constant within each one of the vibration intervals, wherein in each case, a time interval without vibration lies between consecutive vibration intervals, wherein preferably, the length of the vibration intervals and of the time intervals without vibration is at least 300 ms, particularly preferably exactly 300 ms.

12. An operating device (5) for an agricultural working machine (1), wherein the operating device (5) comprises an operating element (6) for operating two lifting devices (2, 3, 4) of the working machine (1),
wherein the operating device (5) comprises at least one selector switch (7), by means of which a focus of the operating element (6) can be switched between the lifting devices (2, 3, 4), wherein the operating device (5) comprises a visualization element (8) by means of which a current lift position of that lifting device (2, 3, 4) on which the operating element (6) is focussed can be visualized,
wherein the operating element (6) has a means (19) which is configured to generate at least one piece of haptic feedback which can be discerned by a user of the agricultural working machine (1),
wherein the means (19) is configured as a linear resonant actuator, wherein the at least one piece of haptic feedback is at least one vibration characteristic,
**characterized in that**
the linear resonant actuator is configured to generate a first vibration characteristic when a target lift position of the active lifting device (3, 4) which can be set by means of the operating element (6) approaches a predeterminable maximum lift position Pᵥₘₐₓ of the active lifting device (3, 4), wherein the vibration of the first vibration characteristic is **characterized by** an initially continuously increasing and subsequently constant vibration intensity,
the linear resonant actuator is configured to generate a second vibration characteristic when a target lift position of the active lifting device (3, 4) which can be set by means of the operating element (6) approaches a predeterminable minimum lift position Pᵥₘᵢₙ of the active lifting device (3, 4), wherein the vibration of the second vibration characteristic is **characterized by** a constant vibration intensity, and
the linear resonant actuator is configured to generate a third vibration characteristic when a target lift position of the active lifting device (3, 4) which can be set by means of the operating element (6) approaches a lift position Pₛₚ of the active lifting device (3, 4) which is stored by means of a storage unit (11) of the working machine (1), wherein the vibration of the third vibration characteristic is **characterized by** an initially continuously increasing then constant and subsequently continuously reducing vibration intensity.

## Revendications

1. Machine de travail agricole (1), en particulier tracteur, qui comprend les éléments suivants :
- un mécanisme de relevage avant (3),
- un mécanisme de relevage arrière (4), et
- un dispositif de commande (5),
le dispositif de commande (5) comprenant un élément de commande (6) destiné à commander les deux mécanismes de relevage (3, 4),
le dispositif de commande (5) comprenant au moins un commutateur de sélection (7) qui permet de commuter un focus de l'élément de commande (6) entre les mécanismes de relevage (3, 4),
le dispositif de commande (5) comprenant au moins un élément de visualisation (8) qui permet de visualiser une position de levage actuelle du mécanisme de relevage (3, 4) actif sur lequel se situe le focus de l'élément de commande (6),
l'élément de commande (6) présentant un dispositif (19) qui est conçu pour générer au moins un retour d'information haptique perceptible pour un utilisateur de la machine agricole (1),
le dispositif (19) étant réalisé comme actionneur de résonance linéaire, le retour d'informations haptique, au nombre d'au moins un, étant au moins une caractéristique de vibration,
**caractérisée en ce que**
l'actionneur de résonance linéaire est conçu pour générer une première caractéristique de vibration lorsqu'une position de levage cible du mécanisme de relevage (3, 4) actif, qui peut être réglée à l'aide de l'élément de commande (6), approche d'une position de levage maximale Pᵥₘₐₓ, définissable à l'avance, du mécanisme de relevage (3, 4) actif, la vibration de la première caractéristique de vibration **se caractérisant par** une intensité de vibration qui augmente de manière continue dans un premier temps et est ensuite constante,
l'actionneur de résonance linéaire est conçu pour générer une deuxième caractéristique de vibration lorsqu'une position de levage cible du mécanisme de relevage (3, 4) actif, qui peut être réglée à l'aide de l'élément de commande (6), approche d'une position de levage minimale Pᵥₘᵢₙ, définissable à l'avance, du mécanisme de relevage (3, 4) actif, la vibration de la deuxième caractéristique de vibration **se caractérisant par** une intensité de vibration constante,
la machine agricole (1) comprenant au moins une unité de mémoire (11) à l'aide de laquelle au moins une information de position concernant une position de levage d'au moins un des mécanismes de relevage (3, 4) peut être enregistrée ou est enregistrée, et
l'actionneur de résonance linéaire est conçu pour générer une troisième caractéristique de vibration lorsqu'une position de levage cible du mécanisme de relevage (3, 4) actif, qui peut être réglée à l'aide de l'élément de commande (6), approche d'une position de levage enregistrée Pₛₚ du mécanisme de relevage (3, 4) actif, la vibration de la troisième caractéristique de vibration **se caractérisant par** une intensité de vibration qui augmente de manière continue dans un premier temps et est ensuite constante, puis diminue de manière continue.

2. Machine de travail agricole (1) selon la revendication 1, **caractérisée en ce que** la première caractéristique de vibration présente trois intervalles de vibration qui se succèdent, de préférence directement, sachant que dans un premier intervalle de vibration, l'intensité de la vibration augmente de manière continue et proportionnelle de zéro jusqu'à une première valeur d'intensité I₁₁, sachant que dans un deuxième intervalle de vibration, succédant au premier intervalle de vibration, l'intensité de la vibration est constante à une deuxième valeur d'intensité I₁₂ qui est supérieure à la première valeur d'intensité I₁₁, l'intensité de la vibration dans un troisième intervalle de vibration, qui succède au deuxième intervalle de vibration, correspondant à l'intensité de la vibration du deuxième intervalle de vibration, sachant qu'une fréquence de la vibration est identique dans les trois intervalles de vibration, l'actionneur de résonance linéaire étant conçu pour générer le premier intervalle de vibration à partir d'un instant t₁₁ où la position de levage cible du mécanisme de relevage (3, 4) actif, pouvant être réglée à l'aide de l'élément de commande (6), correspond à une valeur seuil P₁₁ inférieure à la position de levage maximale Pᵥₘₐₓ, définissable à l'avance, du mécanisme de relevage (3, 4) actif, notamment une valeur seuil inférieure de 10 % à la position de levage maximale Pᵥₘₐₓ définissable à l'avance, jusqu'à un instant t₁₂ où la position de levage cible du mécanisme de relevage (3, 4) actif, pouvant être réglée à l'aide de l'élément de commande (6), correspond à la position de levage maximale Pᵥₘₐₓ définissable à l'avance ; pour générer le deuxième intervalle de vibration à partir de l'instant t₁₂ jusqu'à un instant t₁₃ où un actionnement de l'élément de commande (6) est terminé ; et pour générer le troisième intervalle de vibration à partir de l'instant t₁₃ jusqu'à un instant t₁₄ qui se situe à un certain intervalle de temps après l'instant t₁₃, de préférence au moins 300 ms après l'instant t₁₃, de manière particulièrement avantageuse exactement 300 ms après l'instant t₁₃.

3. Machine de travail agricole (1) selon la revendication 1 ou 2, **caractérisée en ce que** la deuxième caractéristique de vibration présente deux intervalles de vibration qui se succèdent, de préférence directement, sachant que dans un premier intervalle de vibration, l'intensité de la vibration est constante à une valeur d'intensité I₂₁ qui est supérieure à zéro, sachant que l'intensité de la vibration dans un deuxième intervalle de vibration succédant au premier intervalle de vibration correspond à l'intensité de la vibration du premier intervalle de vibration, une fréquence de la vibration étant identique dans les deux intervalles de vibration, l'actionneur de résonance linéaire étant conçu pour générer le premier intervalle de vibration à partir d'un instant t₂₁ où la position de levage cible du mécanisme de relevage (3, 4) actif, pouvant être réglée à l'aide de l'élément de commande (6), correspond à la position de levage minimale Pᵥₘᵢₙ, définissable à l'avance, du mécanisme de relevage (3, 4) actif, jusqu'à un instant t₂₂ où un actionnement de l'élément de commande (6) est terminé ; et pour générer le deuxième intervalle de vibration à partir de l'instant t₂₂ jusqu'à un instant t₂₃ qui se situe à un certain intervalle de temps après l'instant t₂₂, de préférence au moins 300 ms après l'instant t₂₂, de manière particulièrement avantageuse exactement 300 ms après l'instant t₂₂.

4. Machine de travail agricole (1) selon une des revendications précédentes, **caractérisée en ce qu'**une fréquence de la vibration de la première caractéristique de vibration est supérieure à une fréquence de la vibration de la deuxième caractéristique de vibration.

5. Machine de travail agricole (1) selon une des revendications précédentes, **caractérisée en ce que** l'élément de visualisation (8) comprend un bandeau lumineux (9) qui permet d'indiquer la position de levage actuelle du mécanisme de relevage (3, 4) actif respectif, le bandeau lumineux (9) visualisant de préférence une plage de travail totale du mécanisme de relevage (3, 4) actif, qui se trouve entre deux positions extrêmes opposées de celui-ci et est divisée en une pluralité de pas de position, l'élément de visualisation (8) comportant de manière particulièrement avantageuse une pluralité de moyens d'éclairage (10) disposés les uns à côté des autres sous forme de barre ou en forme d'arc de cercle, chaque moyen d'éclairage (10) correspondant de préférence à un pas de position du mécanisme de relevage (3, 4) actif.

6. Machine de travail agricole (1) selon une des revendications précédentes, **caractérisée en ce que** l'élément de visualisation (8) comprend un moyen de reproduction numérique destiné à la reproduction de valeurs numériques, notamment de pourcentages ou d'indications angulaires, et/ou que l'élément de visualisation (8) est adapté pour indiquer visuellement une sélection actuelle de l'un des mécanismes de relevage (3, 4) en vue de l'actionnement à l'aide de l'élément de commande (6), notamment par le biais du changement d'une couleur d'au moins un moyen d'éclairage (10) multicolore.

7. Machine de travail agricole (1) selon une des revendications précédentes, **caractérisée en ce qu'**au moins une information de plage concernant une plage de travail d'au moins un des mécanismes de relevage (3, 4) est enregistrée ou peut être enregistrée dans l'unité de mémoire (11).

8. Machine de travail agricole (1) selon une des revendications précédentes, **caractérisée en ce que** la troisième caractéristique de vibration présente cinq intervalles de vibration qui se succèdent, de préférence directement, sachant que dans un premier intervalle de vibration, l'intensité de la vibration augmente de manière continue et proportionnelle de zéro jusqu'à une première valeur d'intensité I₃₁, sachant que dans un deuxième intervalle de vibration, succédant au premier intervalle de vibration, l'intensité de la vibration est constante à une deuxième valeur d'intensité I₃₂ qui est supérieure à la première valeur d'intensité I₃₁, l'intensité de la vibration dans un troisième intervalle de vibration, qui succède au deuxième intervalle de vibration, correspondant à l'intensité de la vibration du deuxième intervalle de vibration, sachant que dans un quatrième intervalle de vibration, succédant au troisième intervalle de vibration, l'intensité de la vibration diminue de manière continue et proportionnelle à partir de la première valeur d'intensité I₃₁ jusqu'à une troisième valeur d'intensité I₃₃ qui est inférieure à la première valeur d'intensité I₃₁, sachant que dans un cinquième intervalle de vibration, succédant au quatrième intervalle de vibration, l'intensité de la vibration diminue de manière continue et proportionnelle à partir de la troisième valeur d'intensité I₃₃ jusqu'à zéro, une fréquence de la vibration étant identique dans les cinq intervalles de vibration, l'actionneur de résonance linéaire étant conçu pour générer le premier intervalle de vibration à partir d'un instant t₃₁ où la position de levage cible du mécanisme de relevage (3, 4) actif, pouvant être réglée à l'aide de l'élément de commande (6), correspond à une première valeur seuil P₃₁ inférieure ou supérieure à la position de levage enregistrée Pₛₚ du mécanisme de relevage (3, 4) actif, notamment une valeur seuil P₃₁ inférieure ou supérieure de 10 % à la position de levage enregistrée Pₛₚ, jusqu'à un instant t₃₂ où la position de levage cible du mécanisme de relevage (3, 4) actif, pouvant être réglée à l'aide de l'élément de commande (6), correspond à une deuxième valeur seuil P₃₂ inférieure ou supérieure à la position de levage enregistrée Pₛₚ, notamment une deuxième valeur seuil P₃₂ inférieure ou supérieure de 2 % à la position de levage enregistrée P_{sp ;} pour générer le deuxième intervalle de vibration à partir de l'instant t₃₂ jusqu'à l'instant t₃₃ où la position de levage cible du mécanisme de relevage (3, 4) actif, pouvant être réglée à l'aide de l'élément de commande (6), correspond à la position de levage enregistrée Pₛₚ ; pour générer le troisième intervalle de vibration à partir de l'instant t₃₃ jusqu'à un instant t₃₄ où la position de levage cible du mécanisme de relevage (3, 4) actif, pouvant être réglée à l'aide de l'élément de commande (6), correspond à une troisième valeur seuil P₃₃ supérieure ou inférieure à la position de levage enregistrée Pₛₚ, notamment une troisième valeur seuil P₃₃ supérieure ou inférieure de 2 % à la position de levage enregistrée Pₛₚ ; pour générer le quatrième intervalle de vibration à partir de l'instant t₃₄ jusqu'à un instant t₃₅ où la position de levage cible du mécanisme de relevage (3, 4) actif, pouvant être réglée à l'aide de l'élément de commande (6), correspond à une quatrième valeur seuil P₃₄ supérieure ou inférieure à une position de levage enregistrée Pₛₚ, notamment une valeur seuil P₃₄ supérieure ou inférieure de 10 % à la position de levage enregistrée Pₛₚ ; et pour générer le cinquième intervalle de vibration à partir de l'instant t₃₅ jusqu'à un instant t₃₆ qui se situe à un certain intervalle de temps après l'instant t₃₅, de préférence au moins 300 ms après l'instant t₃₅, de manière particulièrement avantageuse exactement 300 ms après l'instant t₃₅.

9. Machine de travail agricole (1) selon une des revendications précédentes, **caractérisée en ce qu'**une fréquence de la vibration de la troisième caractéristique de vibration correspond à une fréquence de la vibration de la deuxième caractéristique de vibration.

10. Machine de travail agricole (1) selon une des revendications précédentes, **caractérisée en ce que** l'actionneur de résonance linéaire est conçu pour générer une quatrième caractéristique de vibration après un enregistrement effectué de l'information de position, au nombre d'au moins une, concernant une position de levage d'au moins un des mécanismes de relevage (3, 4), dans l'unité de mémoire (11), au nombre d'au moins une, la vibration de la quatrième caractéristique de vibration étant pulsée et **caractérisée par** une intensité de vibration constante.

11. Machine de travail agricole (1) selon la revendication 10, **caractérisée en ce que** la quatrième caractéristique de vibration présente au moins trois intervalles de vibration qui se succèdent, sachant que dans les au moins trois intervalles de vibration successifs, l'intensité et une fréquence de la vibration sont respectivement supérieures à zéro et identiques et sont constantes à l'intérieur de chaque intervalle de vibration, sachant qu'un intervalle de temps sans vibration se situe respectivement entre deux intervalles de vibration successifs, la longueur des intervalles de vibration et des intervalles de temps sans vibration étant de préférence d'au moins 300 ms, de manière particulièrement avantageuse exactement de 300 ms.

12. Dispositif de commande (5) d'une machine de travail agricole (1),
le dispositif de commande (5) comprenant un élément de commande (6) destiné à commander deux mécanismes de relevage (2, 3, 4) de la machine (1),
le dispositif de commande (5) comprenant au moins un commutateur de sélection (7) qui permet de commuter un focus de l'élément de commande (6) entre les mécanismes de relevage (2, 3, 4),
le dispositif de commande (5) comprenant un élément de visualisation (8) qui permet de visualiser une position de levage actuelle du mécanisme de relevage (2, 3, 4) sur lequel se situe le focus de l'élément de commande (6),
l'élément de commande (6) présentant un dispositif (19) qui est conçu pour générer au moins un retour d'information haptique perceptible pour un utilisateur de la machine agricole (1),
le dispositif (19) étant réalisé comme actionneur de résonance linéaire, le retour d'informations haptique, au nombre d'au moins un, étant au moins une caractéristique de vibration,
**caractérisé en ce que**
l'actionneur de résonance linéaire est conçu pour générer une première caractéristique de vibration lorsqu'une position de levage cible du mécanisme de relevage (3, 4) actif, qui peut être réglée à l'aide de l'élément de commande (6), approche d'une position de levage maximale Pᵥₘₐₓ, définissable à l'avance, du mécanisme de relevage (3, 4) actif, la vibration de la première caractéristique de vibration **se caractérisant par** une intensité de vibration qui augmente de manière continue dans un premier temps et est ensuite constante,
l'actionneur de résonance linéaire est conçu pour générer une deuxième caractéristique de vibration lorsqu'une position de levage cible du mécanisme de relevage (3, 4) actif, qui peut être réglée à l'aide de l'élément de commande (6), approche d'une position de levage minimale Pᵥₘᵢₙ, définissable à l'avance, du mécanisme de relevage (3, 4) actif, la vibration de la deuxième caractéristique de vibration **se caractérisant par** une intensité de vibration constante, et
l'actionneur de résonance linéaire est conçu pour générer une troisième caractéristique de vibration lorsqu'une position de levage cible du mécanisme de relevage (3, 4) actif, qui peut être réglée à l'aide de l'élément de commande (6), approche d'une position de levage enregistrée Pₛₚ du mécanisme de relevage (3, 4) actif, qui est enregistrée à l'aide d'une unité de mémoire (11) de la machine de travail (1), la vibration de la troisième caractéristique de vibration **se caractérisant par** une intensité de vibration qui augmente de manière continue dans un premier temps et est ensuite constante, puis diminue de manière continue.
